# EUROPEAN PATENT SPECIFICATION

(11) **EP 4 298 775 B1**
(45) Date of publication and mention of the grant of the patent: **15.10.2025**
(21) Application number: 22711309.9
(22) Date of filing: 28.02.2022
(51) Int. Cl.: H04L 65/80, H04W 24/10, H04L 41/5067

(54) **CONFIGURATION FOR QOE MEASUREMENT COLLECTION**
KONFIGURATION ZUR QOE-MESSUNGSSAMMLUNG
CONFIGURATION POUR LA COLLECTE DE MESURES DE QUALITÉ D'EXPÉRIENCE (QOE)

(30) Priority: 26.02.2021 US 202163154560 P
(43) Date of publication of application: 03.01.2024
(73) Proprietor: Lenovo (Singapore) Pte. Ltd., New Tech Park 556741 (SG)
(72) Inventor: CHOI, Hyung-Nam, 85521 Ottobrunn (DE); KARAMPATSIS, Dimitrios, Ruislip Middlesex HA4 6ED (GB); VAISHNAVI, Ishan, 80333 München (DE); KUCHIBHOTLA, Ravi, Chicago, Illinois 60680 (US); LÖHR, Joachim, 65203 Wiesbaden (DE); BASU MALLICK, Prateek, 63303 Dreieich (DE)
(74) Representative: Marks & Clerk LLP
(86) International application number: PCT/IB2022/051756
(87) International publication number: WO 2022/180619

(56) References cited:
- "3rd Generation Partnership Project; Technical Specification Group Services and System Aspects; Telecommunication management; Quality of Experience (QoE) measurement collection; Control and configuration (Release 16)", vol. SA WG5, no. V16.0.0, 8 July 2020 (2020-07-08), pages 1 - 16, XP051924280, Retrieved from the Internet <URL:ftp://ftp.3gpp.org/Specs/archive/28_series/28.405/28405-g00.zip 28405-g00.doc> [retrieved on 20200708]

## Description

### FIELD

The subject matter disclosed herein relates generally to wireless communications and more particularly relates to Quality of Experience ("QoE") measurement collection control, e.g., in Third Generation Partnership Project ("3GPP") New Radio ("NR") systems.

### BACKGROUND

In certain wireless communication systems, operators collect and utilize the QoE measurement information of streaming services/MTSI to better understand the user experience and optimize their UTRAN/E-UTRAN network for the concerned services. For Universal Terrestrial Radio Access Network ("UTRAN"), i.e., a 3G Radio Access Technology ("RAT"), and for evolved UTRAN ("E-UTRAN"), i.e., a 4G RAT, QoE Measurement Collection ("QMC") has been specified for streaming services and MTSI (Multimedia Telephony Service for IMS). However, QMC is currently not supported in 3GPP NR. 3GPP TS 28.405 V16.0.0 describes procedures for collecting QoE measurements.

### BRIEF SUMMARY

Disclosed are procedures for collecting QoE measurements. Said procedures may be implemented by apparatus, systems, methods, or computer program products.

One method at a User Equipment ("UE") for collecting QoE measurements includes receiving a first configuration message for multiple QoE measurements from a communication network, the first configuration message containing at least one parameter to set up QoE measurements for at least one service type and at least one reporting configuration for the at least one service type. The method includes performing QoE measurements in accordance with the first configuration message and transmitting a reporting message to the communication network, the reporting message containing QoE measurements collected in accordance with the first configuration message.

One method at a radio access network ("RAN") for collecting QoE measurements includes generating a first configuration message for multiple QoE measurements, the first configuration message containing at least one parameter to set up QoE measurements for at least one service type and contains at least one reporting configuration for the at least one service type. The method includes transmitting the first configuration message to a communication device and receiving a reporting message from the communication device, the reporting message containing QoE measurements collected in accordance with the first configuration message.

The invention is defined by the subject-matter of the independent claims. Further features are defined in the dependent claims.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a block diagram illustrating one embodiment of a wireless communication system for collecting QoE measurements;
Figure 2 is a diagram illustrating one embodiment of a 3GPP NR protocol stack;
Figure 3A is a diagram illustrating a downlink Radio Resource Control ("RRC") message for configuring, modifying, releasing, pausing, and resuming of QoE measurements;
Figure 3B is a continuation of the RRC message of Figure 3A;
Figure 4 is a diagram illustrating an uplink RRC message for reporting QoE measurements;
Figure 5 is a diagram illustrating call-flow for a procedure to set up one or more QoE measurement configurations;
Figure 6 is a diagram illustrating call-flow for a procedure to release one or more QoE measurements;
Figure 7 is a diagram illustrating call-flow for a procedure to pause and resume the reporting of QoE measurements;
Figure 8 is a diagram illustrating call-flow for a procedure to modify one or more QoE measurement configurations;
Figure 9 is a block diagram illustrating one embodiment of a user equipment apparatus that may be used for collecting QoE measurements;
Figure 10 is a block diagram illustrating one embodiment of a network apparatus that may be used for collecting QoE measurements;
Figure 11 is a flowchart diagram illustrating one embodiment of a first method for collecting QoE measurements; and
Figure 12 is a flowchart diagram illustrating one embodiment of a second method for collecting QoE measurements.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN"), wireless LAN ("WLAN"), or a wide area network ("WAN"), or the connection may be made to an external computer (for example, through the Internet using an Internet Service Provider ("ISP")).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of "A, B and/or C" includes only A, only B, only C, a combination of A and B, a combination of B and C, a combination of A and C or a combination of A, B and C. As used herein, a list using the terminology "one or more of' includes any single item in the list or a combination of items in the list. For example, "one or more of A, B and C "includes only A, only B, only C, a combination of A and B, a combination of B and C, a combination of A and C or a combination of A, B and C. As used herein, a list using the terminology "one of' includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C. As used herein, "a member selected from the group consisting of A, B, and C and combinations thereof" includes only A, only B, only C, a combination of A and B, a combination ofB and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus, or other devices to produce a computer implemented process such that the code which execute on the computer or other programmable apparatus provide processes for implementing the functions/acts specified in the flowchart diagrams and/or block diagrams.

The call-flow diagrams, flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the call-flow, flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatuses for QMC control in NR. In certain embodiments, the methods may be performed using computer code embedded on a computer-readable medium. In certain embodiments, an apparatus or system may include a computer-readable medium containing computer-readable code which, when executed by a processor, causes the apparatus or system to perform at least a portion of the below described solutions.

QMC is currently not supported in NR, but there is strong interest to do so in Rel-17. However, due to the fact that NR is designed for various kinds of services and scenarios, there is a strong demand for a more generic and flexible solution for triggering, configuring, collecting, and reporting of NR QoE measurements compared to the solution as specified for UTRAN/E-UTRAN.

In various embodiments, the NR QoE framework supports multiple service types, including streaming services, MTSI, Virtual Reality ("VR"), Multicast Broadcast Service ("MBS"), and Ultra-Reliable Low-Latency Communication ("URLLC") related services in addition to VR. In some embodiments, there is support of activation/deactivation of QoE measurements using management-based and signaling-based initiation. Accordingly, the RAN may be configured by Operations, Administration, and Management ("OAM") with criteria for QoE measurement triggering and stopping. Moreover, a UE may support configuration and reporting for multiple simultaneous QoE measurements. Still further, the NR QoE framework may support QoE measurement on a per-network slice basis.

Regarding release of QoE measurement configuration, a gNB may issue a release of QoE measurement configuration for UEs previously configured for QoE measurement reporting, provided that the session for which the QoE measurements are reported is completed or due to RAN congestion or due to mobility where target gNB does not support the PDU session of the service for which QoE measurement has been configured.

Regarding QoE measurement handling at RAN overload, in case of RAN overload in standalone connectivity, gNB may stop (i.e., not setup) new QoE measurement configurations, release existing QoE measurement configurations and pause/resume QoE measurement reporting.

Regarding support for Mobility, QoE measurements may be supported in RRC_CONNECTED for all targeted service types and in addition for MBS in RRC IDLE and RRC INACTIVE state.

Regarding RAN visible QoE information reporting by UE, the gNB may send the RAN visible QoE measurement configuration to the UE. The RAN visible QoE measurement report is provided from the application layer ("AL") of the UE to the UE's RRC layer and sent to the gNB.

Regarding radio-related measurements and information for QoE, in order for the network to further evaluate and improve the QoE, RAN may also trigger radio-related measurements towards a certain UE, based on the QoE measurement configuration received from the OAM. For triggering the radio-related measurements an existing mechanism, e.g., Minimization of Drive Test ("MDT") procedure may be used.

For UTRAN and E-UTRAN, QoE Measurement Collection ("QMC") for streaming services/MTSI have been specified. In 3GPP specifications there are two methods defined how OAM can initiate QMC activation/deactivation: Signaling-based initiation and management-based initiation.

The signaling-based procedure is a control-plane procedure where the core network ("CN") is involved, and the CN determines the qualified/concerned UEs to which the QMC activation/deactivation configuration is to be sent. In the case of signaling-based initiation, the OAM initiates QMC activation/deactivation but it is the CN that actually activates/deactivates QMC towards the RAN.

In contrast, the management-based procedure is a procedure that does not involve the CN (e.g., the CN is bypassed), and the OAM directly activates/deactivates a QMC configuration towards RAN. In case of management-based initiation, the RAN determines the qualified UEs to which the QMC activation/deactivation configuration is to be sent.

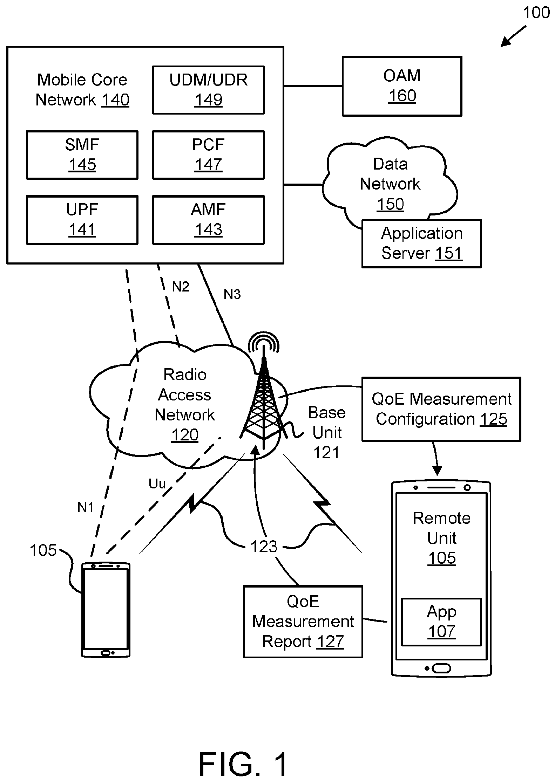

Figure 1 depicts a wireless communication system 100 for collecting QoE measurements, according to embodiments of the disclosure. In one embodiment, the wireless communication system 100 includes at least one remote unit 105, a radio access network ("RAN") 120, and a mobile core network 140. The RAN 120 and the mobile core network 140 form a mobile communication network. The RAN 120 may be composed of a base unit 121 with which the remote unit 105 communicates using wireless communication links 123. Even though a specific number of remote units 105, base units 121, wireless communication links 123, RANs 120, and mobile core networks 140 are depicted in Figure 1, one of skill in the art will recognize that any number of remote units 105, base units 121, wireless communication links 123, RANs 120, and mobile core networks 140 may be included in the wireless communication system 100.

In one implementation, the RAN 120 is compliant with the Fifth-Generation ("5G") cellular system specified in the Third Generation Partnership Project ("3GPP") specifications. For example, the RAN 120 may be a Next Generation Radio Access Network ("NG-RAN"), implementing New Radio ("NR") Radio Access Technology ("RAT") and/or Long-Term Evolution ("LTE") RAT. In another example, the RAN 120 may include non-3GPP RAT (e.g., Wi-Fi^{®} or Institute of Electrical and Electronics Engineers ("IEEE") 802.11-family compliant WLAN). In another implementation, the RAN 120 is compliant with the LTE system specified in the 3GPP specifications. More generally, however, the wireless communication system 100 may implement some other open or proprietary communication network, for example Worldwide Interoperability for Microwave Access ("WiMAX") or IEEE 802.16-family standards, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art. In various embodiments, the remote unit 105 includes a subscriber identity and/or identification module ("SIM") and the mobile equipment ("ME") providing mobile termination functions (e.g., radio transmission, handover, speech encoding and decoding, error detection and correction, signaling and access to the SIM). In certain embodiments, the remote unit 105 may include a terminal equipment ("TE") and/or be embedded in an appliance or device (e.g., a computing device, as described above).

The remote units 105 may communicate directly with one or more of the base units 121 in the RAN 120 via uplink ("UL") and downlink ("DL") communication signals. Furthermore, the UL and DL communication signals may be carried over the wireless communication links 123. Furthermore, the UL communication signals may comprise one or more uplink channels, such as the Physical Uplink Control Channel ("PUCCH") and/or Physical Uplink Shared Channel ("PUSCH"), while the DL communication signals may comprise one or more downlink channels, such as the Physical Downlink Control Channel ("PDCCH") and/or Physical Downlink Shared Channel ("PDSCH"). Here, the RAN 120 is an intermediate network that provides the remote units 105 with access to the mobile core network 140.

In some embodiments, the remote units 105 communicate with an application server 151 via a network connection with the mobile core network 140. For example, an application 107 (e.g., web browser, media client, telephone and/or Voice-over-Internet-Protocol ("VoIP") application) in a remote unit 105 may trigger the remote unit 105 to establish a protocol data unit ("PDU") session (or other data connection) with the mobile core network 140 via the RAN 120. The mobile core network 140 then relays traffic between the remote unit 105 and the application server 151 in the packet data network 150 using the PDU session. The PDU session represents a logical connection between the remote unit 105 and the User Plane Function ("UPF") 141.

In order to establish the PDU session (or PDN connection), the remote unit 105 must be registered with the mobile core network 140 (also referred to as "attached to the mobile core network" in the context of a Fourth Generation ("4G") system). Note that the remote unit 105 may establish one or more PDU sessions (or other data connections) with the mobile core network 140. As such, the remote unit 105 may have at least one PDU session for communicating with the packet data network 150. The remote unit 105 may establish additional PDU sessions for communicating with other data networks and/or other communication peers.

In the context of a 5G system ("5GS"), the term "PDU Session" refers to a data connection that provides end-to-end ("E2E") user plane ("UP") connectivity between the remote unit 105 and a specific Data Network ("DN") through the UPF 141. A PDU Session supports one or more Quality of Service ("QoS") Flows. In certain embodiments, there may be a one-to-one mapping between a QoS Flow and a QoS profile, such that all packets belonging to a specific QoS Flow have the same 5G QoS Identifier ("5QI").

In the context of a 4G/LTE system, such as the Evolved Packet System ("EPS"), a Packet Data Network ("PDN") connection (also referred to as EPS session) provides E2E UP connectivity between the remote unit and a PDN. The PDN connectivity procedure establishes an EPS Bearer, i.e., a tunnel between the remote unit 105 and a PDN Gateway ("PGW", not shown) in the mobile core network 140. In certain embodiments, there is a one-to-one mapping between an EPS Bearer and a QoS profile, such that all packets belonging to a specific EPS Bearer have the same QoS Class Identifier ("QCI").

The base units 121 may be distributed over a geographic region. In certain embodiments, a base unit 121 may also be referred to as an access terminal, an access point, a base, a base station, a Node-B ("NB"), an Evolved Node B (abbreviated as eNodeB or "eNB," also known as Evolved Universal Terrestrial Radio Access Network ("E-UTRAN") Node B), a 5G/NR Node B ("gNB"), a Home Node-B, a relay node, a RAN node, or by any other terminology used in the art. The base units 121 are generally part of a RAN, such as the RAN 120, that may include one or more controllers communicably coupled to one or more corresponding base units 121. These and other elements of radio access network are not illustrated but are well known generally by those having ordinary skill in the art. The base units 121 connect to the mobile core network 140 via the RAN 120.

The base units 121 may serve a number of remote units 105 within a serving area, for example, a cell or a cell sector, via a wireless communication link 123. The base units 121 may communicate directly with one or more of the remote units 105 via communication signals. Generally, the base units 121 transmit DL communication signals to serve the remote units 105 in the time, frequency, and/or spatial domain. Furthermore, the DL communication signals may be carried over the wireless communication links 123. The wireless communication links 123 may be any suitable carrier in licensed or unlicensed radio spectrum. The wireless communication links 123 facilitate communication between one or more of the remote units 105 and/or one or more of the base units 121.

Note that during NR operation on unlicensed spectrum (referred to as "NR-U"), the base unit 121 and the remote unit 105 communicate over unlicensed (i.e., shared) radio spectrum. Similarly, during LTE operation on unlicensed spectrum (referred to as "LTE-U"), the base unit 121 and the remote unit 105 also communicate over unlicensed (i.e., shared) radio spectrum.

In one embodiment, the mobile core network 140 is a 5G Core network ("5GC") or an Evolved Packet Core ("EPC"), which may be coupled to a packet data network 150, like the Internet and private data networks, among other data networks. A remote unit 105 may have a subscription or other account with the mobile core network 140. In various embodiments, each mobile core network 140 belongs to a single mobile network operator ("MNO") and/or Public Land Mobile Network ("PLMN"). The present disclosure is not intended to be limited to the implementation of any particular wireless communication system architecture or protocol.

The mobile core network 140 includes several network functions ("NFs"). As depicted, the mobile core network 140 includes at least one UPF 141. The mobile core network 140 also includes multiple control plane ("CP") functions including, but not limited to, an Access and Mobility Management Function ("AMF") 143 that serves the RAN 120, a Session Management Function ("SMF") 145, a Policy Control Function ("PCF") 147, a Unified Data Management function ("UDM") and a User Data Repository ("UDR"). In some embodiments, the UDM is co-located with the UDR, depicted as combined entity "UDM/UDR" 149. Although specific numbers and types of network functions are depicted in Figure 1, one of skill in the art will recognize that any number and type of network functions may be included in the mobile core network 140.

The UPF(s) 141 is/are responsible for packet routing and forwarding, packet inspection, QoS handling, and external PDU session for interconnecting Data Network ("DN"), in the 5G architecture. The AMF 143 is responsible for termination of Non-Access Spectrum ("NAS") signaling, NAS ciphering and integrity protection, registration management, connection management, mobility management, access authentication and authorization, security context management. The SMF 145 is responsible for session management (i.e., session establishment, modification, release), remote unit (i.e., UE) Internet Protocol ("IP") address allocation and management, DL data notification, and traffic steering configuration of the UPF 141 for proper traffic routing.

The PCF 147 is responsible for unified policy framework, providing policy rules to CP functions, access subscription information for policy decisions in UDR. The UDM is responsible for generation of Authentication and Key Agreement ("AKA") credentials, user identification handling, access authorization, subscription management. The UDR is a repository of subscriber information and may be used to service a number of network functions. For example, the UDR may store subscription data, policy-related data, subscriber-related data that is permitted to be exposed to third party applications, and the like.

In various embodiments, the mobile core network 140 may also include a Network Repository Function ("NRF") (which provides Network Function ("NF") service registration and discovery, enabling NFs to identify appropriate services in one another and communicate with each other over Application Programming Interfaces ("APIs")), a Network Exposure Function ("NEF") (which is responsible for making network data and resources easily accessible to customers and network partners), an Authentication Server Function ("AUSF"), or other NFs defined for the 5GC. When present, the AUSF may act as an authentication server and/or authentication proxy, thereby allowing the AMF 143 to authenticate a remote unit 105. In certain embodiments, the mobile core network 140 may include an authentication, authorization, and accounting ("AAA") server.

In various embodiments, the mobile core network 140 supports different types of mobile data connections and different types of network slices, wherein each mobile data connection utilizes a specific network slice. Here, a "network slice" refers to a portion of the mobile core network 140 optimized for a certain traffic type or communication service. For example, one or more network slices may be optimized for enhanced mobile broadband ("eMBB") service. As another example, one or more network slices may be optimized for ultra-reliable low-latency communication ("URLLC") service. In other examples, a network slice may be optimized for machine-type communication ("MTC") service, massive MTC ("mMTC") service, Internet-of-Things ("IoT") service. In yet other examples, a network slice may be deployed for a specific application service, a vertical service, a specific use case, etc.

A network slice instance may be identified by a single-network slice selection assistance information ("S-NSSAI") while a set of network slices for which the remote unit 105 is authorized to use is identified by network slice selection assistance information ("NSSAI"). Here, "NSSAI" refers to a vector value including one or more S-NSSAI values. In certain embodiments, the various network slices may include separate instances of network functions, such as the SMF 145 and UPF 141. In some embodiments, the different network slices may share some common network functions, such as the AMF 143. The different network slices are not shown in Figure 1 for ease of illustration, but their support is assumed.

The wireless communication system 100 includes an operations, administration, and management ("OAM") platform 160. The Operations, Administration and Maintenance ("OAM") platform 160 is involved with the operating, administering, managing, and maintaining of the system 100. "Operations" encompass automatic monitoring of environment, detecting and determining faults and alerting admins. "Administration" involves collecting performance stats, accounting data for the purpose of billing, capacity planning using Usage data and maintaining system reliability. Administration can also involve maintaining the service databases which are used to determine periodic billing. "Maintenance" involves upgrades, fixes, new feature enablement, backup and restore and monitoring the media health. In certain embodiments, the OAM platform 160 may also be involved with provisioning, i.e., the setting up of the user accounts, devices, and services. Note that an OAM platform 160 may receive parameters and/or configurations from a Business Support System ("BSS") and/or an Operations Support System ("OSS").

Communication devices, such as the remote unit 105 may be required to measure and report various QoE metrics, such as network performance metrics (e.g., signal quality, bandwidth, jitter, delay, etc.), media-related metrics (e.g., encoding, media resolution, etc.), or other metrics. In various embodiments, the OAM 160 configures and/or activates QMC by sending one or more QoE measurement configurations to the mobile core network 140 (i.e., signaling-based initiation) or directly to the RAN 120 (i.e., management-based initiation).

The base unit 121 may then send a QoE measurement configuration 125 to a remote unit 105 for collecting and reporting QoE measurements. As described in further detail below, the base unit 121 may additionally send one or more RRC messages for deactivating/releasing, or modifying a QoE measurement configuration, and/or RRC messages for pausing and/or resuming QoE measurement reporting. The remote unit 105 transmits one or more QoE measurement reports 127 to the base unit 127 upon collecting the requested QoE measurements in accordance with the QoE measurement configuration 125.

While Figure 1 depicts components of a 5G RAN and a 5G core network, the described embodiments for collecting QoE measurements apply to other types of communication networks and RATs, including IEEE 802.11 variants, Global System for Mobile Communications ("GSM", i.e., a 2G digital cellular network), General Packet Radio Service ("GPRS"), Universal Mobile Telecommunications System ("UMTS"), LTE variants, CDMA 2000, Bluetooth, ZigBee, Sigfox, and the like.

Moreover, in an LTE variant where the mobile core network 140 is an EPC, the depicted network functions may be replaced with appropriate EPC entities, such as a Mobility Management Entity ("MME"), a Serving Gateway ("SGW"), a PGW, a Home Subscriber Server ("HSS"), and the like. For example, the AMF 143 may be mapped to an MME, the SMF 145 may be mapped to a control plane portion of a PGW and/or to an MME, the UPF 141 may be mapped to an SGW and a user plane portion of the PGW, the UDM/UDR 149 may be mapped to an HSS, etc.

In the following descriptions, the term "gNB" is used for the base station/ base unit, but it is replaceable by any other radio access node, e.g., RAN node, ng-eNB, eNB, Base Station ("BS"), Access Point ("AP"), etc. Additionally, the term "UE" is used for the mobile station/ remote unit, but it is replaceable by any other remote device, e.g., remote unit, MS, ME, etc. Further, the operations are described mainly in the context of 5G NR. However, the below described solutions/methods are also equally applicable to other mobile communication systems for collecting QoE measurements.

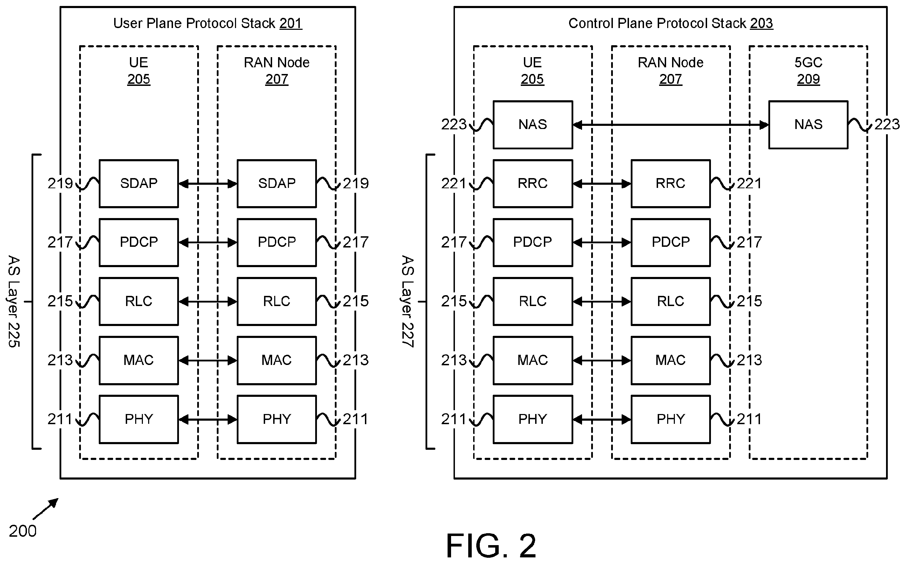

Figure 2 depicts a NR protocol stack 200, according to embodiments of the disclosure. While Figure 2 shows a UE 205, a RAN node 207 and the 5G core network ("5GC") 209, these are representative of a set of remote units 105 interacting with a base unit 121 and a mobile core network 140. As depicted, the protocol stack 200 comprises a User Plane protocol stack 201 and a Control Plane protocol stack 203. The User Plane protocol stack 201 includes a physical ("PHY") layer 211, a Medium Access Control ("MAC") sublayer 213, a Radio Link Control ("RLC") sublayer 215, a Packet Data Convergence Protocol ("PDCP") sublayer 217, and Service Data Adaptation Protocol ("SDAP") layer 219. The Control Plane protocol stack 203 includes a physical layer 211, a MAC sublayer 213, a RLC sublayer 215, and a PDCP sublayer 217. The Control Place protocol stack 203 also includes a Radio Resource Control ("RRC") layer 221 and a Non-Access Stratum ("NAS") layer 223.

The AS layer 225 (also referred to as "AS protocol stack") for the User Plane protocol stack 201 consists of at least SDAP, PDCP, RLC and MAC sublayers, and the physical layer. The AS layer 227 for the Control Plane protocol stack 203 consists of at least RRC, PDCP, RLC and MAC sublayers, and the physical layer. The Layer-2 ("L2") is split into the SDAP, PDCP, RLC and MAC sublayers. The Layer-3 ("L3") includes the RRC sublayer 221 and the NAS layer 223 for the control plane and includes, e.g., an Internet Protocol ("IP") layer or PDU Layer (not depicted) for the user plane. L1 and L2 are referred to as "lower layers," while L3 and above (e.g., transport layer, application layer) are referred to as "higher layers" or "upper layers."

The physical layer 211 offers transport channels to the MAC sublayer 213. The MAC sublayer 213 offers logical channels to the RLC sublayer 215. The RLC sublayer 215 offers RLC channels to the PDCP sublayer 217. The PDCP sublayer 217 offers radio bearers to the SDAP sublayer 219 and/or RRC layer 221. The SDAP sublayer 219 offers QoS flows to the core network (e.g., 5GC). The RRC layer 221 manages the addition, modification, and release of Carrier Aggregation ("CA") and/or Dual Connectivity ("DC"). The RRC layer 221 also manages the establishment, configuration, maintenance, and release of Signaling Radio Bearers ("SRBs") and Data Radio Bearers ("DRBs").

The NAS layer 223 is located in the UE 205 and the 5GC 209. NAS messages are passed transparently through the RAN. The NAS layer 223 is used to manage the establishment of communication sessions and for maintaining continuous communications with the UE 205 as it moves between different cells of the RAN. In contrast, the AS layer in the UE 205 and the RAN carries information over the wireless portion of the network. While not depicted in Figure 2, the IP layer exists above the NAS layer 223, a transport layer exists above the IP layer, and an application layer exists above the transport layer.

The MAC layer 213 is the lowest sublayer in the Layer-2 architecture of the NR protocol stack. Its connection to the PHY layer 211 below is through transport channels, and the connection to the RLC layer 215 above is through logical channels. The MAC layer 213 therefore performs multiplexing and demultiplexing between logical channels and transport channels: the MAC layer 213 in the transmitting side constructs MAC PDUs, known as transport blocks, from MAC Service Data Units ("SDUs") received through logical channels, and the MAC layer 213 in the receiving side recovers MAC SDUs from MAC PDUs received through transport channels.

The MAC layer 213 provides a data transfer service for the RLC layer 215 through logical channels, which are either control logical channels which carry control data (e.g., RRC signaling) or traffic logical channels which carry user plane data. On the other hand, the data from the MAC layer 213 is exchanged with the physical layer through transport channels, which are classified as downlink or uplink. Data is multiplexed into transport channels depending on how it is transmitted over the air.

The PHY layer 211 is responsible for the actual transmission of data and control information via the air interface, i.e., the PHY Layer 211 carries all information from the MAC transport channels over the air interface on the transmission side. Some of the important functions performed by the PHY layer 211 include coding and modulation, link adaptation (e.g., Adaptive Modulation and Coding ("AMC")), power control, cell search (for initial synchronization and handover purposes) and other measurements (inside the 3GPP system (i.e., NR and/or LTE system) and between systems) for the RRC layer 221. The PHY layer 211 performs transmissions based on transmission parameters, such as the modulation scheme, the coding rate (i.e., the modulation and coding scheme ("MCS")), the number of physical resource blocks, etc.

In order to support QoE measurement collection in NR RAN, RRC messages are described that can used for configuration, reporting, pausing, and resuming of QoE measurements in NR RAN. Moreover, details of RRC signaling and network/UE actions are described with respect to configuration, reporting, pausing, and resuming of QoE measurements.

In order to clearly separate the procedures for QoE measurements from other procedures, new RRC messages in UL/DL may be introduced in NR RRC specification TS 38.331. For DL RRC messaging, a 'MeasConfigAppLayerControl' message may be used for configuring, releasing, pausing, and resuming of QoE measurements in NR RAN. For UL RRC messaging, a 'MeasReportAppLayer' message may be used for reporting collected QoE measurements. These RRC messages may be sent in RRC_CONNECTED state and may be transmitted via any of the current SRBs (e.g., SRB1, SRB2, SRB3) or via a separate SRB (e.g., SRB4).

Alternatively, the content of the new RRC messages may be carried on existing RRC messages, e.g., RRCReconfiguration message in DL, UEAssistanceInformation or UEInformationResponse message in UL. In such implementations, one or more of the below described parameters may be included for configuration, reporting, pausing, and resuming of QoE measurements in NR RAN.

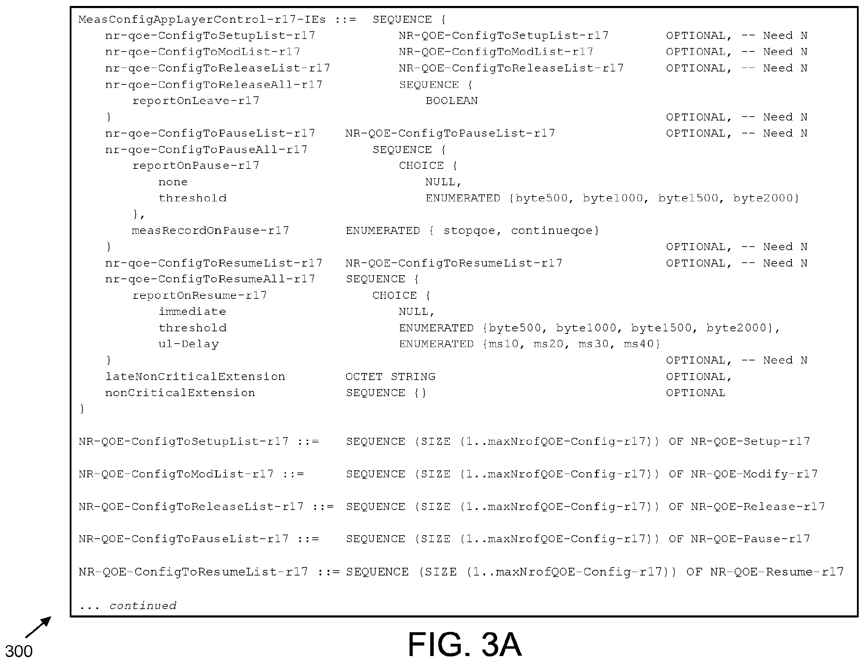

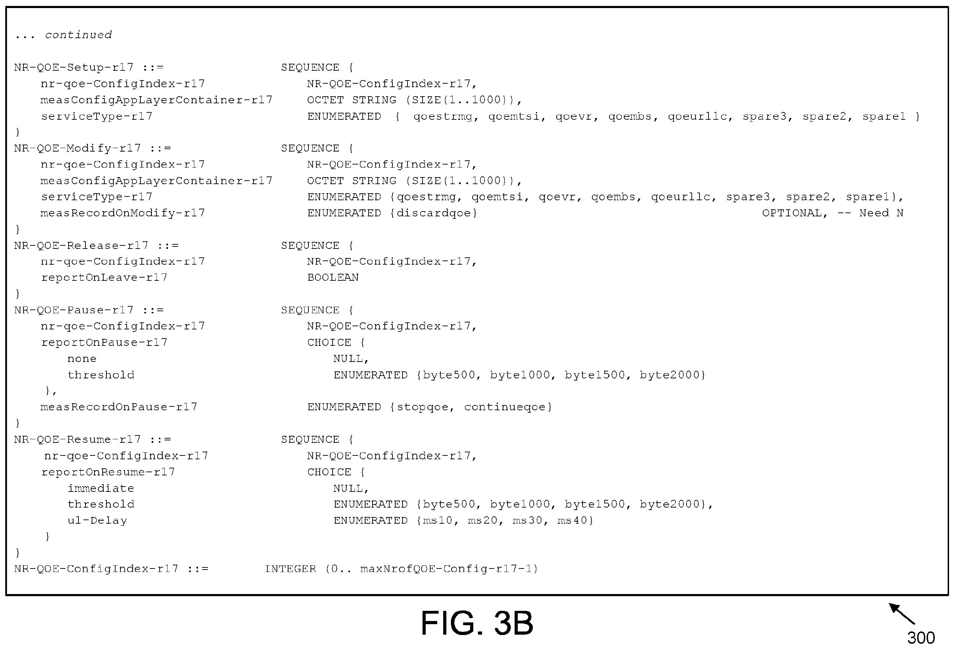

Figures 3A-3B depict the Abstract Syntax Notation 1 ("ASN.1") structure 300 for DL signaling with respect to configuration, modification, releasing, pausing, and resuming of QoE measurements, according to embodiments of the disclosure. For DL QMC signaling, the following parameters are defined:

For QMC activation/setup, a MeasConfigAppLayerControl message (or other suitable DL RRC message) may contain a list of (e.g., one or multiple) QoE measurement configurations to setup, where each entry in the list corresponds to a new QoE measurement configuration to be setup. In some embodiments, such parameter may be named "nr-qoe-ConfigToSetupList."

For each entry in the list of QoE measurement configurations to setup, the following sub-parameters may be signaled: 1) A QoE configuration index "nr-qoe-ConfigIndex" to indicate the QoE measurement configuration to setup; 2) A container "measConfigAppLayerContainer" carrying a new QoE measurement configuration; and/or 3) A service type "serviceType" to indicate the type of QoE measurement configuration. Possible values of the sub-parameter "serviceType" include (but are not limited to) "qoestrmg" (i.e., for streaming services), "qoemtsi" (i.e., for MTSI), "qoevr" (i.e., for VR services), "qoembs" (i.e., for MBS), and "qoeurllc" (i.e., for URLLC services). One example of the parameter "nr-qoe-ConfigToSetupList" and its accompanying sub-parameters is depicted in Figures 3A-3B.

For QMC modification, a MeasConfigAppLayerControl message (or other suitable DL RRC message) may contain a list of (e.g., one or multiple) QoE measurement configurations to modify, where each entry corresponds to a previously configured QoE measurement configuration to be modified. In some embodiments, such parameter may be named "nr-qoe-ConfigToModList." In other embodiments, the list of QoE measurement configurations to modify may be combined with the list of QoE measurement configurations to setup, e.g., in a single/unified parameter for setup and/or modification of a set of QoE measurement configuration(s).

For each entry in the list of QoE measurement configurations to modify, the following sub-parameters may be signaled: 1) A QoE configuration index "nr-qoe-ConfigIndex" to indicate the previously configured QoE measurement configuration to modify; 2) A container "measConfigAppLayerContainer" carrying a modified QoE measurement configuration; 3) A service type "serviceType" to indicate the type of modified QoE measurement configuration; and/or 4) A parameter "measRecordOnModify" to indicate whether or not the UE shall discard the collected QoE measurements in accordance with the previously configured QoE measurement configuration. One example of the parameter "nr-qoe-ConfigToModList" and its accompanying sub-parameters is depicted in Figures 3A-3B.

For QMC release, a MeasConfigAppLayerControl message (or other suitable DL RRC message) may contain a list of (e.g., one or multiple) QoE measurement configurations to release, where each entry corresponds to an existing QoE measurement configuration to be released. In some embodiments, such parameter may be named "nr-qoe-ConfigToReleaseList."

For each entry in the list of QoE measurement configurations to release, the following sub-parameters may be signaled: 1) A QoE configuration index "nr-qoe-ConfigIndex" to indicate the QoE measurement configuration to release; and/or 2) A parameter "reportOnLeave" of BOOLEAN type. For the parameter "reportOnLeave," the value TRUE may indicate that the UE is to initiate the measurement reporting of collected QoE measurements (if there are any) prior to releasing the QoE measurement configuration, while the value FALSE may indicate that the UE is to discard any collected QoE measurements prior to releasing the QoE measurement configuration. One example of the parameter "nr-qoe-ConfigToReleaseList" and its accompanying sub-parameters is depicted in Figures 3A-3B.

As an alternative to the list of QoE measurement configuration to release, the network may use the parameter "nr-qoe-ConfigToReleaseAll" to release all QoE measurement configurations stored in the UE. In addition, the parameter "nr-qoe-ConfigToReleaseAll" may contain the above described sub-parameter "reportOnLeave" of BOOLEAN type to indicate whether or not the UE is to initiate the measurement reporting of all collected QoE measurements (if there are any) before releasing all QoE measurement configurations. One example of the parameter "nr-qoe-ConfigToReleaseAll" and its accompanying sub-parameter is depicted in Figures 3A-3B.

For the release of QoE measurement configurations the network uses either the list parameter "nr-qoe-ConfigToReleaseList" or parameter "nr-qoe-ConfigToReleaseAll" but not both simultaneously. Note that the network may use the list version even if only a single or few QoE measurement configurations need to be released.

For pausing QMC reporting, a MeasConfigAppLayerControl message (or other suitable DL RRC message) may contain a list of (e.g., one or multiple) QoE measurement reporting to pause, where each entry corresponds to an existing QoE measurement configuration to be paused. In some embodiments, such parameter may be named "nr-qoe-ConfigToPauseList." In other embodiments, the list of QoE measurement configurations to pause may be combined with the list of QoE measurement configurations to setup/modify, e.g., using a sub-parameter to indicate that identified QoE measurement configuration(s) is/are to be paused.

For each entry in the list of QoE measurement reporting to pause, the following sub-parameters may be signaled: 1) A QoE configuration index "nr-qoe-ConfigIndex" to indicate the QoE measurement configuration to pause; 2) A parameter "measRecordOnPause" to indicate whether the UE is to continue or stop collecting/recording QoE measurements; and/or 3) A parameter "reportOnPause" to indicate whether the UE is to stop reporting of the QoE measurement immediately (e.g., indicated using value "none") or continue reporting in accordance with a threshold value (e.g., indicated using value "threshold"). For the latter case, if the threshold is set to e.g., 500 Bytes (value "byte500") and if the size of collected QoE measurements are below or equal to this threshold then the UE is to continue reporting of the QoE measurements, otherwise the UE is to stop reporting. One example of the parameter "nr-qoe-ConfigToPauseList" and its accompanying sub-parameters is depicted in Figures 3A-3B.

As an alternative to the list of QoE measurement reporting to pause, the network may use the parameter "nr-qoe-ConfigToPauseAll" to pause all QoE measurement configurations stored in the UE. In addition, the parameter "nr-qoe-ConfigToPauseAll" may contain the above described sub-parameter "reportOnPause" to indicate whether the UE is to stop reporting of all QoE measurements immediately (value "none") or continue reporting in accordance with a threshold value (value "threshold"), and the above described sub-parameter "measRecordOnPause" to indicate whether the UE is to continue or stop collecting QoE measurements. One example of the parameter "nr-qoe-ConfigToPauseAll" and its accompanying sub-parameters is depicted in Figures 3A-3B.

For the pausing of QoE measurement reporting, the network uses either the list parameter "nr-qoe-ConfigToPauseList" or parameter "nr-qoe-ConfigToPauseAll" but not both simultaneously. Note that the network may use the list version if only a single or few QoE measurement reporting need to be paused.

For resuming QMC reporting, a MeasConfigAppLayerControl message (or other suitable DL RRC message) may contain a list of (e.g., one or multiple) QoE measurement reporting to resume, where each entry corresponds to a paused QoE measurement configuration to be resumed. In some embodiments, such parameter may be named "nr-qoe-ConfigToResumeList." In other embodiments, the list of QoE measurement configurations to resume may be combined with the list of QoE measurement configurations to setup/modify, e.g., using a sub-parameter to indicate that identified QoE measurement configuration(s) is/are to be resumed.

For each entry in the list of QoE measurement reporting to resume, the following sub-parameters may be signaled: 1) A QoE configuration index "nr-qoe-ConfigIndex" to indicate the QoE measurement configuration to resume; and/or 2) A sub-parameter "reportOnResume" to indicate the conditions for the UE to resume QoE measurement reporting. For the sub-parameter "reportOnResume" the value "immediate" may be used to indicate that the UE is allowed to resume reporting immediately. However, to avoid a surge of reporting, the value "threshold" may be used to indicate that the UE is allowed to resume reporting if the size of QoE measurements is equal or higher than the signaled threshold value. Alternatively, to avoid a surge of reporting, the value "ul-Delay" may be used to indicate that the UE is allowed to resume reporting after the configured time value to avoid any reporting surge. One example of the parameter "nr-qoe-ConfigToResumeList" and its accompanying sub-parameters is depicted in Figures 3A-3B.

As an alternative to the list of QoE measurement reporting to resume the network may use the parameter "nr-qoe-ConfigToResumeAll" to resume all paused QoE measurement configurations stored in the UE. In addition, the parameter "nr-qoe-ConfigToResumeAll" may contain the above described sub-parameter "reportOnResume" to indicate the conditions for the UE to resume QoE measurement reporting. One example of the parameter "nr-qoe-ConfigToResumeAll" and its accompanying sub-parameter is depicted in Figures 3A-3B.

For the resumption of QoE measurement reporting, the network uses either the list parameter "nr-qoe-ConfigToResumeList" or parameter "nr-qoe-ConfigToResumeAll" but not both simultaneously. Note that the network may use the list version if only a single or few QoE measurement reporting need to be resumed.

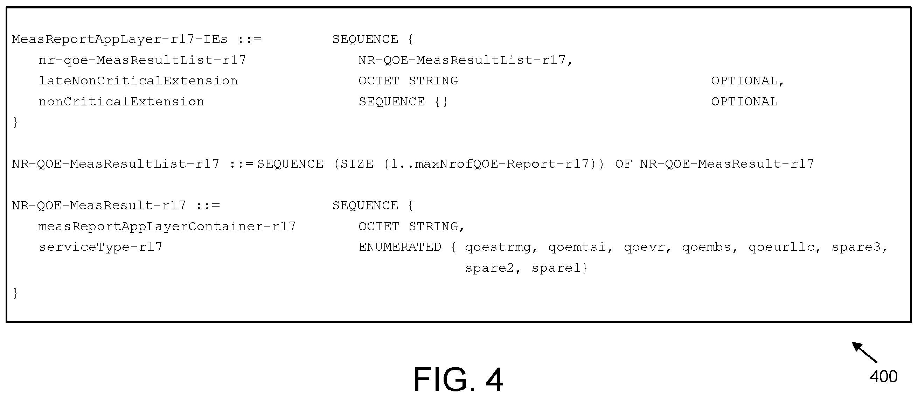

Figure 4 depicts the ASN.1 structure 400 for the UL signaling with respect to the reporting of QoE measurements. For UL QMC signaling, the following parameter is defined:

For reporting collected QoE measurement reports, a MeasReportAppLayer message (or other suitable UL RRC message) may contain a list of (e.g., one or multiple) QoE measurement reports, where each entry corresponds to a QoE measurement report for a certain service type. In some embodiments, such parameter may be named "nr-qoe-MeasResultList."

For each entry in the list of QoE measurement reports, the following sub-parameters may be signaled: 1) A container "measReportAppLayerContainer" carrying a QoE measurement report; and/or 2) A service type "serviceType" to indicate the type of QoE measurement report. Possible values of the sub-parameter "serviceType" include (but are not limited to) "qoestrmg" (i.e., for streaming services), "qoemtsi" (i.e., for MTSI), "qoevr" (i.e., for VR services), "qoembs" (i.e., for MBS), and "qoeurllc" (i.e., for URLLC services). One example of the parameter "nr-qoe-MeasResultList" and its accompanying sub-parameters is depicted in Figure 4.

The maximum number of entries in "nr-qoe-MeasResultList" is defined by parameter maxNrofQOE-Report-r17, e.g., up to 8. However, for the actual number of QoE measurement reports to include in the parameter "nr-qoe-MeasResultList," the UE also considers the maximum size limit of a PDCP SDU of 9000 bytes. Accordingly, the UE adds only QoE measurement reports whose aggregated size does not exceed 9000 bytes.

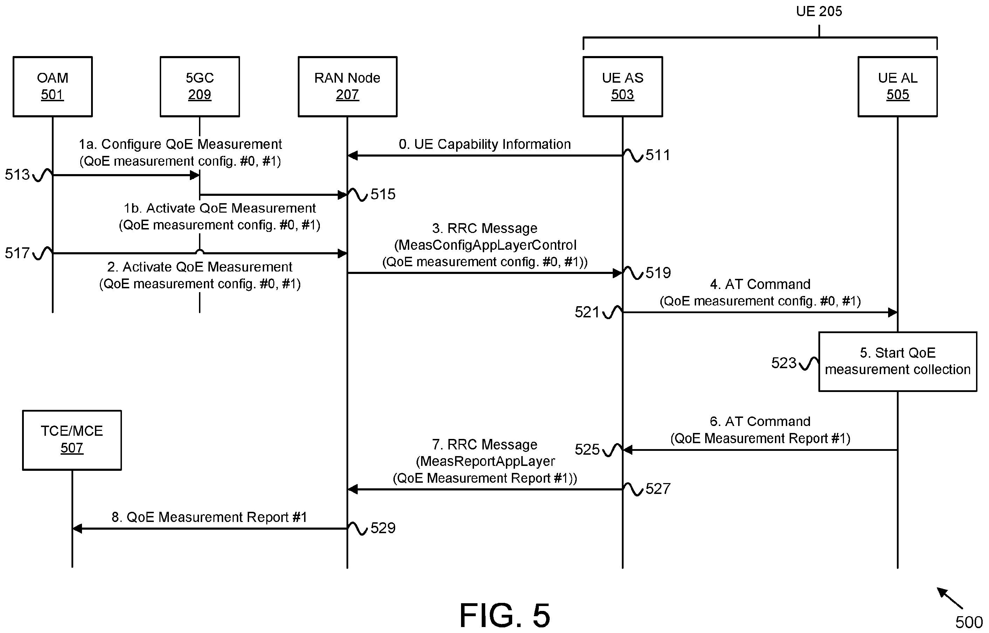

Figure 5 depicts exemplary message flow of a procedure 500 for configuring and reporting of the QoE measurements, according to embodiments of a first solution. The procedure 500 involves an OAM entity 501, the 5GC 209, the RAN node 207, an Access Stratum layer of the UE 205 (denoted as "UE AS" 503), and an application layer of the UE 205 (denoted as "UE AL" 505). The OAM is interested in receiving QoE measurements for certain services from UEs which are being serviced in a PLMN, for example, Multimedia Telephony Service for IP multimedia subsystem ("IMS") and Ultra-Reliable Low-Latency Communication ("URLLC").

At Step 0, as a precondition the UE 205 sends UE capability information to the RAN, i.e., from UE AS 503 to RAN node 207 (see messaging 511). Here, the UE capability information indicates whether the UE 205 supports QMC. In the procedure 500, it is assumed that the UE 205 supports QMC.

At Step 1, the OAM entity 501 uses signaling-based initiation for QMC activation. Specifically, at Step 1a, the OAM entity 501 sends a "Configure QoE measurement" message to the 5GC 209 (see messaging 513). Here, the "Configure QoE measurement" message contains QoE measurement configurations for both service types (i.e., MTSI: #0, and URLLC: #1).

At Step 1b, in accordance with the received QoE measurement configuration from OAM, the 5GC 209 activates the QoE measurement configuration for a qualified UE and sends to the RAN node 207 an "Activate QoE measurement" message including the QoE measurement configurations for both service types (see messaging 515).

Alternatively, in case of management-based initiation the OAM entity 501 sends an activation message directly to RAN. Accordingly, at Step 2, the OAM entity 501 sends to the RAN node 207 an "Activate QoE measurement" message including the QoE measurement configurations for both service types (see messaging 517). Note that either Step 1 or Step 2 is performed, but not both. In the procedure 500, it is assumed that the UE 205 is determined to be a qualified UE.

The QoE measurement configuration may include parameters such as PLMN target, session to record of an application, service type, area scope (list of cells or list of Tracking Areas ("TAs")), QoE reference (final destination for the QoE measurement reports to send, e.g., TCE/MCE (Trace Collection Entity and/or Measurement Collection Entity)), QoE metrics of the concerned service type (including start time and duration of recording), for details see 3GPP Technical Specification ("TS") 28.405. For instance, QoE metrics for streaming services include among other Average Throughput, Initial Playout Delay, Buffer Level, Play List, Device information, for details see 3GPP TS 26.247.

At Step 3, the RAN node 207 sends to the qualified UE AS 503 a DL RRC message for setting up QoE measurements, such as the MeasConfigAppLayerControl message or RRCReconfiguration message (see messaging 519). In accordance with the received QoE measurement configurations from the OAM entity 501 (in case of management-based initiation) or from the 5GC 209 (in case of signaling-based initiation), the MeasConfigAppLayerControl/ RRCReconfiguration message may include the following settings, e.g., in parameter "nr-qoe-ConfigToSetupList-r17" as depicted in Figures 3A-3B.

Table 1 shows a list of settings that may be included for Multimedia Telephony Service for IMS ("MTSI"), e.g., QoE measurement configuration #0.

**Table 1: Settings for MTSI**

| **Setting** | **Description** |
|---|---|
| nr-qoe-ConfigIndex-r17 | Value = '0' |
| measConfigAppLayerContainer-r17 | measurement configuration (size of up to 500 bytes) |
| serviceType-r17 | Value = "qoemtsi" for MTSI |

Table 2 shows a list of settings that may be included for URLLC, e.g., QoE measurement configuration #1.

**Table 2: Settings for URLLC**

| **Setting** | **Description** |
|---|---|
| nr-qoe-ConfigIndex-r17 | Value = '1' |
| measConfigAppLayerContainer-r17 | measurement configuration (size of up to 800 bytes) |
| serviceType-r17 | Value = "qoeurllc" for URLLC |

At Step 4, the UE AS 503 sends the received QoE measurement configurations with Index #0 and #1 to the UE AL 505, e.g., using an AT command (see messaging 521).

At Step 5, the UE AL 505 starts QoE measurement collection in accordance with the received QoE measurement configurations, i.e., with Index #0 and #1 (see block 523).

At Step 6, here it is assumed that the QoE measurement collection for the configuration #1 is the first to complete, so that UE AL 505 sends the collected QoE measurement results to the UE AS 503, e.g., using AT command (see messaging 525). The collected QoE measurement results for the configuration #1 are referred to as QoE Measurement Report #1. Note that upon completion of the QoE measurement collection for the configuration #0, the UE AL 505 will send the collected QoE measurement results to the UE AS 503 in a subsequent QoE Measurement Report #0.

At Step 7, the UE AS 503 sends the QoE Measurement Report #1 in the MeasReportAppLayer message (e.g., a UL RRC message) to the RAN node 207 (see messaging 527). The MeasReportAppLayer message may include the following settings, e.g., in parameter "nr-qoe-MeasResultList-r17" as depicted in Figure 4.

Table 3 shows a list of settings that may be included for URLLC, e.g., QoE measurement configuration #1.

**Table 3: MeasReportAppLayer settings for URLLC**

| **Setting** | **Description** |
|---|---|
| measConfigAppLayerContainer-r17 | measurement report (size of up to 3500 bytes) |
| serviceType-r17 | Value = "qoeurllc" for URLLC |

At Step 8, the RAN node 207 forwards the received QoE measurement report to a TCE/MCE 507 (see messaging 529).

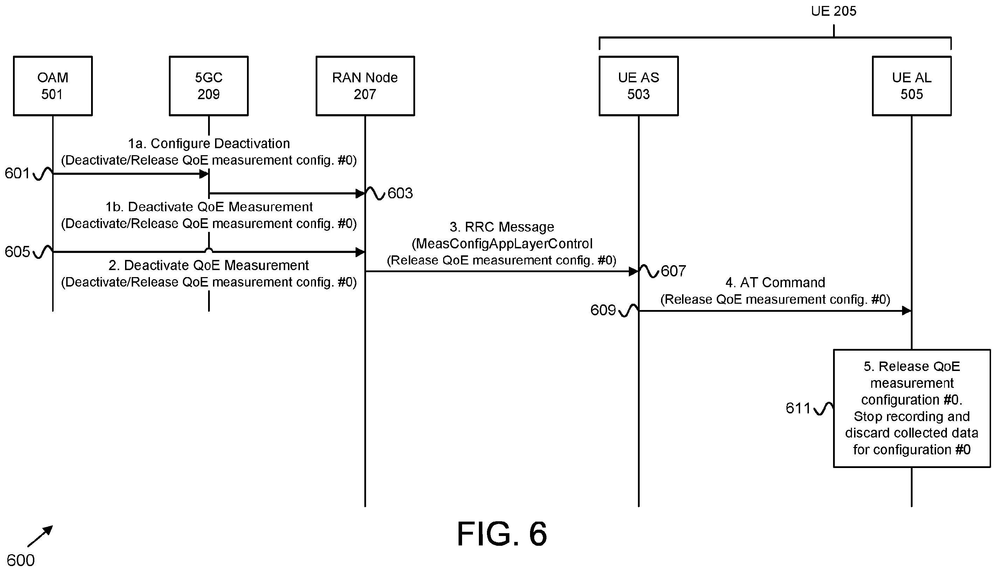

Figure 6 depicts exemplary message flow of a procedure 600 for releasing the QoE measurement configuration #0, according to embodiments of a second solution. The procedure 600 involves the OAM entity 501, the 5GC 209, the RAN node 207, and the UE 205 containing the UE AS 503 and UE AL 505. In some embodiments, the scenario of the first solution is assumed, where the UE AL 505 is configured to (still) collect QoE measurements for the configuration #0 (for MTSI). However, the second solution assumes that, in the meantime, the OAM is no longer interested in receiving QoE measurements for the service MTSI from UEs, e.g., because it has already received enough QoE information for this service type.

At Step 1, the OAM entity 501 uses signaling-based initiation for QMC deactivation. Specifically, at Step 1a, the OAM entity 501 sends a "Configure Deactivation" message to the 5GC 209 (see messaging 601). Here, the "Configure Deactivation" message contains an indication of the concerned service (i.e., MTSI: #0). At Step 1b, in accordance with the received "Configure Deactivation" message from OAM, the 5GC 209 sends to the RAN node 207 an "Deactivate QoE measurement" message with an indication to deactivate the QoE measurement configuration #0 for MTSI and an indication for which UE(s) the concerned QoE measurement configuration should be deactivated (see messaging 603).

Alternatively, in case of management-based initiation the OAM entity 501 sends a deactivation message directly to RAN. Accordingly, at Step 2, the OAM entity 501 sends directly to the RAN node 207 an "Deactivate QoE measurement" message with the indication to deactivate the QoE measurement configuration #0 for MTSI (see messaging 605). Note that either Step 1 or Step 2 is performed, but not both.

At Step 3, the RAN node 207 sends to the UE AS 503 a DL RRC message to release the concerned QoE measurement configuration, such as the MeasConfigAppLayerControl message or RRCReconfiguration message (see messaging 607). In accordance with the received deactivation of QoE measurement configuration #0 for MTSI from the OAM entity 501 (in case of management-based initiation) or from the 5GC 209 (in case of signaling-based initiation), the MeasConfigAppLayerControl/ RRCReconfiguration message may include the following settings, e.g., in parameter "nr-qoe-ConfigToReleaseList-r17" as depicted in Figures 3A-3B.

Table 4 shows a list of settings that may be included for MTSI, e.g., QoE measurement configuration #0 when releasing/deactivating QoE measurements.

**Table 4: Settings for MTSI**

| **Setting** | **Description** |
|---|---|
| nr-qoe-ConfigIndex-r17 | Value = '0' |
| reportOnLeave -r17 | Value = FALSE (i.e., discard any collected QoE measurements) |

At Step 4, the UE AS 503 sends the received release configuration for MTSI to the UE AL 505, e.g., using AT command (see messaging 609).

At Step 5, the UE AL 505 releases the QoE measurement configuration #0, stops any recording for configuration #0, and discards any collected data associated to configuration #0 (see block 611).

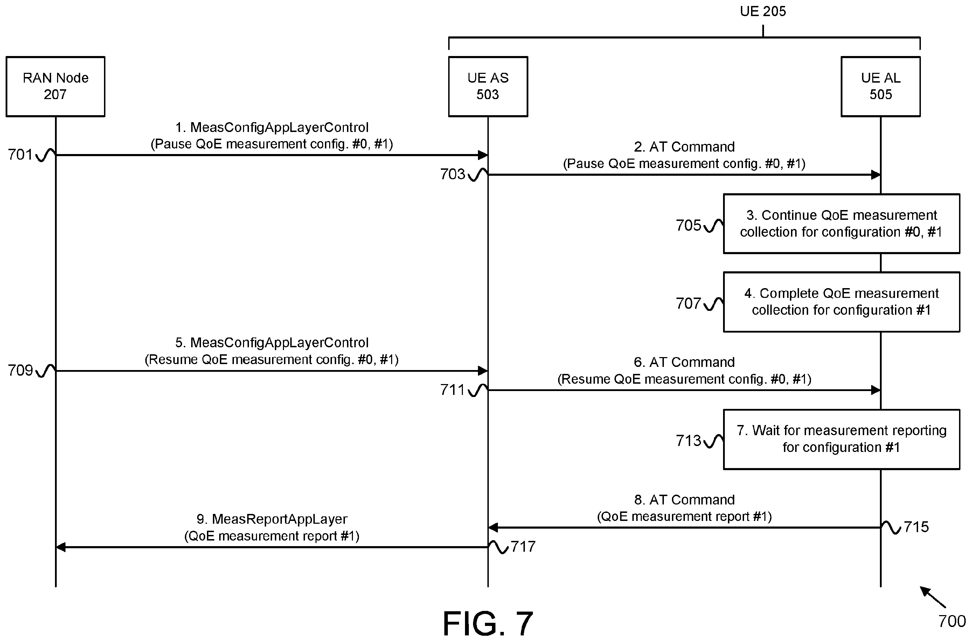

Figure 7 depicts an exemplary message flow for pause and resume of QoE measurement reporting, e.g., due to RAN congestion, according to embodiments of a third solution. The procedure 700 involves the RAN node 207, and the UE 205 containing the UE AS 503 and UE AL 505. In some embodiments, the scenario of the first solution is assumed, where the UE AL 505 is configured to collect QoE measurements for MTSI (configuration index #0) and URLLC (configuration index #1). However, the third solution assumes that the QoE measurement collection in the UE AL 505 is ongoing and QoE measurement reports have not yet been sent to the RAN node 207.

For example, due to temporary RAN congestion the RAN node 207 may decide to pause the QoE measurement reporting of the UE 205. And after RAN congestion has ended, the RAN node 207 may decide to resume the QoE measurement reporting of the UE 205.

At Step 1, the RAN node 207 sends to the UE AS 503 a DL RRC message for pausing QMC reporting, such as the MeasConfigAppLayerControl message or RRCReconfiguration message (see messaging 701). Here, the MeasConfigAppLayerControl/ RRCReconfiguration message may contain the following settings, e.g., in parameter "nr-qoe-ConfigToPauseList-r17" as depicted in Figures 3A-3B.

Table 5 shows a list of settings that may be included for MTSI, e.g., QoE measurement configuration #0.

**Table 5: Settings for MTSI**

| **Setting** | **Description** |
|---|---|
| nr-qoe-ConfigIndex-r17 | Value = '0' |
| reportOnPause-r17 | Value = "none" (i.e., stop reporting immediately) |
| measRecordOnPause-r17 | Value = "continueqoe" (i.e., continue collecting/recording QoE measurements) |

Table 6 shows a list of settings that may be included for URLLC, e.g., QoE measurement configuration #1.

**Table 6: Settings for URLLC**

| **Setting** | **Description** |
|---|---|
| nr-qoe-ConfigIndex-r17 | Value = '1' |
| reportOnPause-r17 | Value = "none" (i.e., stop reporting immediately) |
| measRecordOnPause-r17 | Value = "continueqoe" (i.e., continue collecting/recording QoE measurements) |

At Step 2, the UE AS 503 sends the received QoE measurement configurations with Index #0 and #1 to the UE AL 505, e.g., using an AT command (see messaging 703).

At Step 3, the UE AL 505 pauses the QoE reporting for the QoE measurement configurations with Index #0 and #1, but continues to collect QoE measurements for the concerned QoE measurement configurations (see block 705).

At Step 4, the UE AL 505 completes QoE measurement collection for the QoE measurement configuration with Index #1, i.e., for URLLC (see block 707).

At Step 5, it is assumed that after a while RAN congestion has ended so that the RAN node 207 sends to the UE AS 503 a DL RRC message for resuming QoE reporting, such as the MeasConfigAppLayerControl message or RRCReconfiguration message (see messaging 709). Here, the MeasConfigAppLayerControl/ RRCReconfiguration message may contain the following settings, e.g., in parameter "nr-qoe-ConfigToResumeList-r17" as depicted in Figures 3A-3B.

Table 7 shows a list of settings that may be included for MTSI, e.g., QoE measurement configuration #0.

**Table 7: Settings for MTSI**

| **Setting** | **Description** |
|---|---|
| nr-qoe-ConfigIndex-r17 | Value = '0' |
| reportOnResume-r17 | Value = "ul-Delay" set to the value of 20ms (to avoid surge of reporting) |

Table 8 shows a list of settings that may be included for URLLC, e.g., QoE measurement configuration #1.

**Table 8: Settings for URLLC**

| **Setting** | **Description** |
|---|---|
| nr-qoe-ConfigIndex-r17 | Value = '1' |
| reportOnPause-r17 | Value = "ul-Delay" set to the value of 40ms (to avoid surge of reporting) |

At Step 6, the UE AS 503 sends the received QoE measurement configurations to resume QoE measurement reporting to the UE AL 505, e.g., using an AT command (see messaging 711).

At Step 7, it is assumed that the UE AL 505 has only available QoE measurements for configuration with index #1 (URLLC) and waits for its reporting until expiry of "ul-Delay" set to the value of 40ms (see block 713).

At Step 8, the UE AL 505 sends the collected QoE measurement results for configuration with Index #1 to the UE AS 503 in a QoE measurement report #1, e.g., using AT command (see messaging 715).

At Step 9, the UE AS 503 sends the QoE measurement report #1 in the MeasReportAppLayer message (e.g., a UL RRC message) to the RAN node 207 (see messaging 717). The MeasReportAppLayer may include settings, e.g., in nr-qoe-MeasResultList-r17 as described above in Table 3 and depicted in Figure 4.

In an alternative embodiment, Step 7 may be performed by the UE AS 503 instead of the UE AL 505. In this embodiment, the UE AL 505 would send the collected QoE measurement results for configuration #1 to the UE AS 503 after step 4, and the UE AS 503 (temporarily) stores the received QoE measurement report #1 until it receives the resume indication from the RAN node 207.

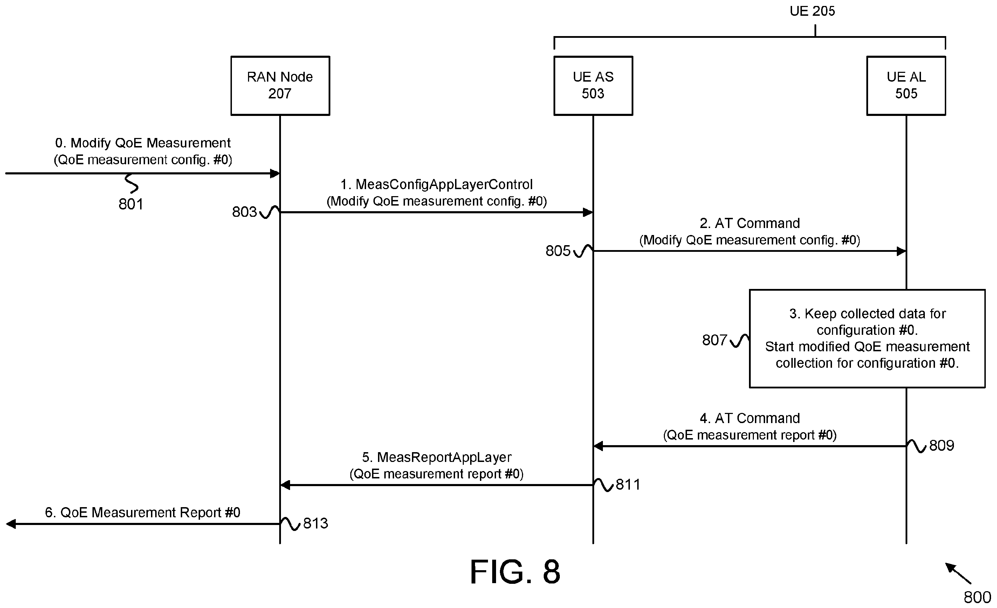

Figure 8 depicts exemplary message flow of a procedure 800 for modification of a QoE measurement configuration, according to embodiments of a fourth solution. The procedure 800 involves the RAN node 207, and the UE 205 containing the UE AS 503 and UE AL 505. In some embodiments, the scenario of the first solution is assumed, where the UE AL 505 is configured to collect QoE measurements for MTSI (configuration index #0) and URLLC (configuration index #1). Furthermore, it is assumed that the QoE measurement collection in UE AL 505 is ongoing and QoE measurement reports for MTSI have not yet been sent to the RAN node 207.

At Step 0, as a precondition, the OAM determines that the already received QoE information for MTSI from other UEs are not sufficient and decides to extend the duration of recording for ongoing QoE measurement configurations for the concerned service. Therefore, the RAN node 207 receives a modified QoE measurement configuration for MTSI (see messaging 801). In one embodiment, the RAN node 207 receives the modified QoE measurement configuration from OAM, e.g., from the OAM entity 501 (not depicted), similar to Step 2 of Figure 5. In another embodiment, the RAN node 207 receives the modified QoE measurement configuration from a core network, e.g., from the 5GC 209 (not depicted), similar to Steps 1a and 1b of Figure 5.

At Step 1, the RAN node 207 sends to the UE AS 503 a DL RRC message for modifying QMC reporting, such as the MeasConfigAppLayerControl message or RRCReconfiguration message (see messaging 803). In accordance with the received modified QoE measurement configuration for MTSI from the OAM entity 501 (in case of management-based initiation) or from the 5GC 209 (in case of signaling-based initiation), the MeasConfigAppLayerControl/ RRCReconfiguration message may include the following settings, e.g., in parameter "nr-qoe-ConfigToModList-r17" as depicted in Figures 3A-3B.

Table 9 shows a list of settings that may be included for MTSI, e.g., QoE measurement configuration #0 when modifying QoE measurements.

**Table 9: Settings for MTSI**

| **Setting** | **Description** |
|---|---|
| nr-qoe-ConfigIndex-r17 | Value = '0' |
| measConfigAppLayerContainer-r17 | modified measurement configuration (size of up to 500 bytes) |
| serviceType-r17 | Value = "qoemtsi" for MTSI |
| measRecordOnModify-r17 | Value = "absent" (i.e., the collected QoE measurements in accordance with the previously configured QoE measurement configuration shall not be discarded) |

At Step 2, the UE AS 503 sends the received modified configuration with index #0 for MTSI to the UE AL 505, e.g., using AT command (see messaging 805).

At Step 3, the UE AL 505 replaces the previous configuration #0 with the modified one. Additionally, the UE AL 505 keeps the QoE measurements collected according to previous configuration #0 and starts recording new QoE measurements according to modified configuration #0 (see block 807).

At Step 4, the UE AL 505 completes QoE measurement collection for the QoE measurement configuration with Index #0, i.e., for MTSI. The UE AL 505 sends the collected QoE measurement results for configuration with Index #0 to the UE AS 503 in a QoE measurement report #0, e.g., using AT command (see messaging 809).

At Step 5, the UE AS 503 sends the QoE measurement report #0 in the MeasReportAppLayer message (e.g., a UL RRC message) to the RAN node 207 (see messaging 811). The MeasReportAppLayer message may include the following settings, e.g., parameter "in nr-qoe-MeasResultList-r17" as depicted in Figure 4.

Table 10 shows a list of settings that may be included for MTSI, e.g., QoE measurement configuration #0.

**Table 10: Settings for MTSI**

| **Setting** | **Description** |
|---|---|
| measConfigAppLayerContainer-r17 | measurement report (size of up to 3500 bytes) |
| serviceType-r17 | Value = "qoemtsi" for MTSI |

At Step 6, the RAN node 207 forwards the received QoE measurement report to a collecting entity (see messaging 813). In one embodiment, the final destination for the QoE measurement reports is a TCE/MCE, such as the TCE/MCE 507 (not depicted), similar to Step 8 of Figure 5.

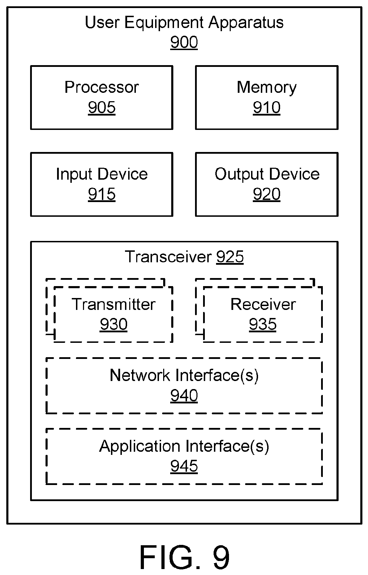

Figure 9 depicts a user equipment apparatus 900 that may be used for collecting QoE measurements, according to embodiments of the disclosure. In various embodiments, the user equipment apparatus 900 is used to implement one or more of the solutions described above. The user equipment apparatus 900 may be one embodiment of the remote unit 105, the UE 205, described above. Furthermore, the user equipment apparatus 900 may include a processor 905, a memory 910, an input device 915, an output device 920, and a transceiver 925.

In some embodiments, the input device 915 and the output device 920 are combined into a single device, such as a touchscreen. In certain embodiments, the user equipment apparatus 900 may not include any input device 915 and/or output device 920. In various embodiments, the user equipment apparatus 900 may include one or more of: the processor 905, the memory 910, and the transceiver 925, and may not include the input device 915 and/or the output device 920.

As depicted, the transceiver 925 includes at least one transmitter 930 and at least one receiver 935. In some embodiments, the transceiver 925 communicates with one or more cells (or wireless coverage areas) supported by one or more base units 121. In various embodiments, the transceiver 925 is operable on unlicensed spectrum. Moreover, the transceiver 925 may include multiple UE panels supporting one or more beams. Additionally, the transceiver 925 may support at least one network interface 940 and/or application interface 945. The application interface(s) 945 may support one or more APIs. The network interface(s) 940 may support 3GPP reference points, such as Uu, N1, PC5, etc. Other network interfaces 940 may be supported, as understood by one of ordinary skill in the art.

The processor 905, in one embodiment, may include any known controller capable of executing computer-readable instructions and/or capable of performing logical operations. For example, the processor 905 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 905 executes instructions stored in the memory 910 to perform the methods and routines described herein. The processor 905 is communicatively coupled to the memory 910, the input device 915, the output device 920, and the transceiver 925.

In various embodiments, the processor 905 controls the user equipment apparatus 900 to implement the above described UE behaviors. In certain embodiments, the processor 905 may include an application processor (also known as "main processor") which manages application-domain and operating system ("OS") functions and a baseband processor (also known as "baseband radio processor") which manages radio functions.

In various embodiments, the processor 905 receives (via the transceiver 925) a first configuration for QoE measurements from a RAN node, where the first configuration contains at least one parameter to set up QoE measurements for at least one service type and at least one reporting configuration for the at least one service type. The processor 905 may then perform QoE measurements in accordance with the first configuration and control the transceiver 925 to send a reporting message to the communication network, the reporting message containing QoE measurements collected in accordance with the first configuration.

In some embodiments, the at least one parameter to set up QoE measurements includes a list of QoE measurement configurations to set up or to modify. In certain embodiments, each entry in the list of QoE measurement configurations contains an QoE configuration index, a corresponding service type, and a corresponding measurement configuration.

In some embodiments, the processor receives the first configuration by receiving an RRC reconfiguration message (e.g., *RRCReconfiguration)* from the RAN node (e.g., gNB). In some embodiments, the reporting message contains a plurality of QoE measurement reports.

In some embodiments, the processor 905 further receives a second configuration from the RAN node (i.e., via the receiver 935). Here, the second configuration contains an indication to deactivate and/or release one or more QoE measurement configurations. In certain embodiments, the indication to deactivate and/or release one or more QoE measurement configurations includes a list of QoE measurement configurations to deactivate and/or release, where each entry in the list of QoE measurement configurations contains an QoE configuration index.

In some embodiments, the processor 905 further receives a second configuration from the RAN node (i.e., via the receiver 935). Here, the second configuration contains at least one indication to pause reporting of a particular QoE measurement configuration. In certain embodiments, the processor 905 further receives a second configuration from the RAN node (i.e., via the receiver 935), where the third configuration contains at least one indication to resume reporting of the particular QoE measurement configuration.

The memory 910, in one embodiment, is a computer readable storage medium. In some embodiments, the memory 910 includes volatile computer storage media. For example, the memory 910 may include a RAM, including dynamic RAM ("DRAM"), synchronous dynamic RAM ("SDRAM"), and/or static RAM ("SRAM"). In some embodiments, the memory 910 includes non-volatile computer storage media. For example, the memory 910 may include a hard disk drive, a flash memory, or any other suitable non-volatile computer storage device. In some embodiments, the memory 910 includes both volatile and non-volatile computer storage media.

In some embodiments, the memory 910 stores data related to collecting QoE measurements. For example, the memory 910 may store various parameters, panel/beam configurations, resource assignments, policies, and the like as described above. In certain embodiments, the memory 910 also stores program code and related data, such as an operating system or other controller algorithms operating on the apparatus 900.

The input device 915, in one embodiment, may include any known computer input device including a touch panel, a button, a keyboard, a stylus, a microphone, or the like. In some embodiments, the input device 915 may be integrated with the output device 920, for example, as a touchscreen or similar touch-sensitive display. In some embodiments, the input device 915 includes a touchscreen such that text may be input using a virtual keyboard displayed on the touchscreen and/or by handwriting on the touchscreen. In some embodiments, the input device 915 includes two or more different devices, such as a keyboard and a touch panel.

The output device 920, in one embodiment, is designed to output visual, audible, and/or haptic signals. In some embodiments, the output device 920 includes an electronically controllable display or display device capable of outputting visual data to a user. For example, the output device 920 may include, but is not limited to, a Liquid Crystal Display ("LCD"), a Light-Emitting Diode ("LED") display, an Organic LED ("OLED") display, a projector, or similar display device capable of outputting images, text, or the like to a user. As another, non-limiting, example, the output device 920 may include a wearable display separate from, but communicatively coupled to, the rest of the user equipment apparatus 900, such as a smart watch, smart glasses, a heads-up display, or the like. Further, the output device 920 may be a component of a smart phone, a personal digital assistant, a television, a table computer, a notebook (laptop) computer, a personal computer, a vehicle dashboard, or the like.

In certain embodiments, the output device 920 includes one or more speakers for producing sound. For example, the output device 920 may produce an audible alert or notification (e.g., a beep or chime). In some embodiments, the output device 920 includes one or more haptic devices for producing vibrations, motion, or other haptic feedback. In some embodiments, all or portions of the output device 920 may be integrated with the input device 915. For example, the input device 915 and output device 920 may form a touchscreen or similar touch-sensitive display. In other embodiments, the output device 920 may be located near the input device 915.

The transceiver 925 communicates with one or more network functions of a mobile communication network via one or more access networks. The transceiver 925 operates under the control of the processor 905 to transmit messages, data, and other signals and also to receive messages, data, and other signals. For example, the processor 905 may selectively activate the transceiver 925 (or portions thereof) at particular times in order to send and receive messages.

The transceiver 925 includes at least transmitter 930 and at least one receiver 935. One or more transmitters 930 may be used to provide UL communication signals to a base unit 121, such as the UL transmissions described herein. Similarly, one or more receivers 935 may be used to receive DL communication signals from the base unit 121, as described herein. Although only one transmitter 930 and one receiver 935 are illustrated, the user equipment apparatus 900 may have any suitable number of transmitters 930 and receivers 935. Further, the transmitter(s) 930 and the receiver(s) 935 may be any suitable type of transmitters and receivers. In one embodiment, the transceiver 925 includes a first transmitter/receiver pair used to communicate with a mobile communication network over licensed radio spectrum and a second transmitter/receiver pair used to communicate with a mobile communication network over unlicensed radio spectrum.

In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 925, transmitters 930, and receivers 935 may be implemented as physically separate components that access a shared hardware resource and/or software resource, such as for example, the network interface 940.

In various embodiments, one or more transmitters 930 and/or one or more receivers 935 may be implemented and/or integrated into a single hardware component, such as a multi-transceiver chip, a system-on-a-chip, an Application-Specific Integrated Circuit ("ASIC"), or other type of hardware component. In certain embodiments, one or more transmitters 930 and/or one or more receivers 935 may be implemented and/or integrated into a multi-chip module. In some embodiments, other components such as the network interface 940 or other hardware components/circuits may be integrated with any number of transmitters 930 and/or receivers 935 into a single chip. In such embodiment, the transmitters 930 and receivers 935 may be logically configured as a transceiver 925 that uses one more common control signals or as modular transmitters 930 and receivers 935 implemented in the same hardware chip or in a multi-chip module.

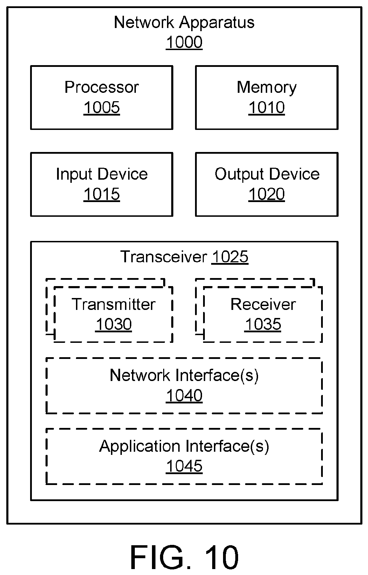

Figure 10 depicts a network apparatus 1000 that may be used for collecting QoE measurements, according to embodiments of the disclosure. In one embodiment, network apparatus 1000 may be one implementation of a RAN device, such as the base unit 121 and/or the RAN node 207, as described above. Furthermore, the network apparatus 1000 may include a processor 1005, a memory 1010, an input device 1015, an output device 1020, and a transceiver 1025.

In some embodiments, the input device 1015 and the output device 1020 are combined into a single device, such as a touchscreen. In certain embodiments, the network apparatus 1000 may not include any input device 1015 and/or output device 1020. In various embodiments, the network apparatus 1000 may include one or more of: the processor 1005, the memory 1010, and the transceiver 1025, and may not include the input device 1015 and/or the output device 1020.

As depicted, the transceiver 1025 includes at least one transmitter 1030 and at least one receiver 1035. Here, the transceiver 1025 communicates with one or more remote units 105. Additionally, the transceiver 1025 may support at least one network interface 1040 and/or application interface 1045. The application interface(s) 1045 may support one or more APIs. The network interface(s) 1040 may support 3GPP reference points, such as Uu, N1, N2 and N3. Other network interfaces 1040 may be supported, as understood by one of ordinary skill in the art.

The processor 1005, in one embodiment, may include any known controller capable of executing computer-readable instructions and/or capable of performing logical operations. For example, the processor 1005 may be a microcontroller, a microprocessor, a CPU, a GPU, an auxiliary processing unit, a FPGA, or similar programmable controller. In some embodiments, the processor 1005 executes instructions stored in the memory 1010 to perform the methods and routines described herein. The processor 1005 is communicatively coupled to the memory 1010, the input device 1015, the output device 1020, and the transceiver 1025.

In various embodiments, the network apparatus 1000 is a RAN node (e.g., gNB) that communicates with one or more UEs, as described herein. In such embodiments, the processor 1005 controls the network apparatus 1000 to perform the above described RAN behaviors. When operating as a RAN node, the processor 1005 may include an application processor (also known as "main processor") which manages application-domain and operating system ("OS") functions and a baseband processor (also known as "baseband radio processor") which manages radio functions.

In various embodiments, the processor 1005 generates a first configuration for QoE measurements, where the first configuration contains at least one parameter to set up QoE measurements for at least one service type and at least one reporting configuration for the at least one service type. Via the transceiver 1025, the processor 1005 sends the first configuration to a UE (e.g., to a communication device) and receives a reporting message from the UE, where the reporting message contains QoE measurements collected in accordance with the first configuration.

In some embodiments, the at least one parameter to set up QoE measurements includes a list of QoE measurement configurations to set up or to modify. In certain embodiments, each entry in the list of QoE measurement configurations contains an QoE configuration index, a corresponding service type, and a corresponding measurement configuration.

In some embodiments, the processor 1005 sends the first configuration by transmitting an RRC reconfiguration message (e.g., *RRCReconfiguration)* to the UE. In some embodiments, the reporting message contains a plurality of QoE measurement reports.

In some embodiments, the processor 1005 sends a second configuration to the UE (i.e., via the transmitter 1030). Here, the second configuration may contain an indication to deactivate and/or release one or more QoE measurement configurations. In certain embodiments, the indication to deactivate and/or release one or more QoE measurement configurations includes a list of QoE measurement configurations to deactivate and/or release, where each entry in the list of QoE measurement configurations contains an QoE configuration index.

In some embodiments, the processor 1005 sends a third configuration to the UE (i.e., via the transmitter 1030). Here, the third configuration may contain at least one indication to pause reporting of a particular QoE measurement configuration. In further embodiments, the processor 1005 may further send a fourth configuration to the UE (i.e., via the transmitter 1030), where the fourth configuration contains at least one indication to resume reporting of the particular QoE measurement configuration.

The memory 1010, in one embodiment, is a computer readable storage medium. In some embodiments, the memory 1010 includes volatile computer storage media. For example, the memory 1010 may include a RAM, including dynamic RAM ("DRAM"), synchronous dynamic RAM ("SDRAM"), and/or static RAM ("SRAM"). In some embodiments, the memory 1010 includes non-volatile computer storage media. For example, the memory 1010 may include a hard disk drive, a flash memory, or any other suitable non-volatile computer storage device. In some embodiments, the memory 1010 includes both volatile and non-volatile computer storage media.

In some embodiments, the memory 1010 stores data related to collecting QoE measurements. For example, the memory 1010 may store parameters, configurations, resource assignments, policies, and the like, as described above. In certain embodiments, the memory 1010 also stores program code and related data, such as an operating system or other controller algorithms operating on the apparatus 1000.

The input device 1015, in one embodiment, may include any known computer input device including a touch panel, a button, a keyboard, a stylus, a microphone, or the like. In some embodiments, the input device 1015 may be integrated with the output device 1020, for example, as a touchscreen or similar touch-sensitive display. In some embodiments, the input device 1015 includes a touchscreen such that text may be input using a virtual keyboard displayed on the touchscreen and/or by handwriting on the touchscreen. In some embodiments, the input device 1015 includes two or more different devices, such as a keyboard and a touch panel.

The output device 1020, in one embodiment, is designed to output visual, audible, and/or haptic signals. In some embodiments, the output device 1020 includes an electronically controllable display or display device capable of outputting visual data to a user. For example, the output device 1020 may include, but is not limited to, an LCD display, an LED display, an OLED display, a projector, or similar display device capable of outputting images, text, or the like to a user. As another, non-limiting, example, the output device 1020 may include a wearable display separate from, but communicatively coupled to, the rest of the network apparatus 1000, such as a smart watch, smart glasses, a heads-up display, or the like. Further, the output device 1020 may be a component of a smart phone, a personal digital assistant, a television, a table computer, a notebook (laptop) computer, a personal computer, a vehicle dashboard, or the like.

In certain embodiments, the output device 1020 includes one or more speakers for producing sound. For example, the output device 1020 may produce an audible alert or notification (e.g., a beep or chime). In some embodiments, the output device 1020 includes one or more haptic devices for producing vibrations, motion, or other haptic feedback. In some embodiments, all or portions of the output device 1020 may be integrated with the input device 1015. For example, the input device 1015 and output device 1020 may form a touchscreen or similar touch-sensitive display. In other embodiments, the output device 1020 may be located near the input device 1015.

The transceiver 1025 includes at least transmitter 1030 and at least one receiver 1035. One or more transmitters 1030 may be used to communicate with the UE, as described herein. Similarly, one or more receivers 1035 may be used to communicate with network functions in the Public Land Mobile Network ("PLMN") and/or RAN, as described herein. Although only one transmitter 1030 and one receiver 1035 are illustrated, the network apparatus 1000 may have any suitable number of transmitters 1030 and receivers 1035. Further, the transmitter(s) 1030 and the receiver(s) 1035 may be any suitable type of transmitters and receivers.

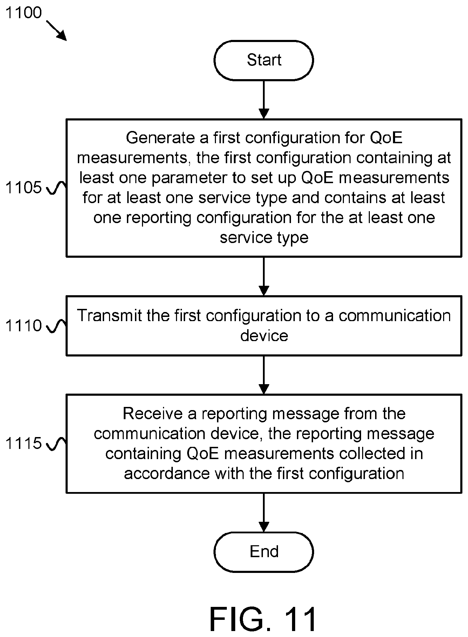

Figure 11 depicts one embodiment of a method 1100 for collecting QoE measurements, according to embodiments of the disclosure. In various embodiments, the method 1100 is performed by a network entity, such as the base unit 121, the RAN node 207, and/or the network apparatus 1000, described above, described above as described above. In some embodiments, the method 1100 is performed by a processor, such as a microcontroller, a microprocessor, a CPU, a GPU, an auxiliary processing unit, a FPGA, or the like.

The method 1100 begins and generates 1105 a first configuration for QoE measurements, where the first configuration contains at least one parameter to set up QoE measurements for at least one service type and contains at least one reporting configuration for the at least one service type. The method 1100 includes transmitting 1110 the first configuration to a communication device (e.g., to a UE). The method 1100 includes receiving 1115 a reporting message from the communication device, where the reporting message contains QoE measurements collected in accordance with the first configuration. The method 1100 ends.

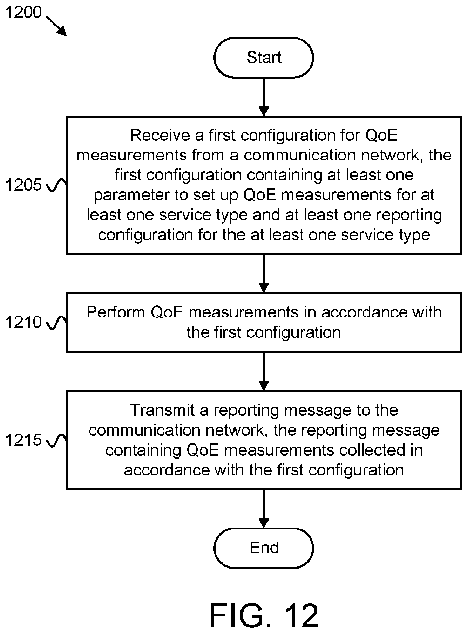

Figure 12 depicts one embodiment of a method 1200 for collecting QoE measurements, according to embodiments of the disclosure. In various embodiments, the method 1200 is performed by a UE device, such as the remote unit 105, the UE 205, and/or the user equipment apparatus 900, described above as described above. In some embodiments, the method 1200 is performed by a processor, such as a microcontroller, a microprocessor, a CPU, a GPU, an auxiliary processing unit, a FPGA, or the like.

The method 1200 begins and receives 1205 a first configuration for QoE measurements from a communication network, the first configuration containing at least one parameter to set up QoE measurements for at least one service type and at least one reporting configuration for the at least one service type. The method 1200 includes performing 1210 QoE measurements in accordance with the first configuration. The method 1200 includes transmitting 1215 a reporting message to the communication network, the reporting message containing QoE measurements collected in accordance with the first configuration. The method 1200 ends.

Disclosed herein is a first apparatus for collecting QoE measurements, according to embodiments of the disclosure. The first apparatus may be implemented by a network entity, such as the base unit 121, the RAN node 207, and/or the network apparatus 1000, described above. The first apparatus includes a processor that generates a first configuration for QoE measurements, the first configuration containing at least one parameter to set up QoE measurements for at least one service type and at least one reporting configuration for the at least one service type. The first apparatus includes a transmitter that transmits the first configuration to a communication device (e.g., to a UE). The first apparatus includes a receiver that receives a reporting message from the communication device, the reporting message containing QoE measurements collected in accordance with the first configuration.

In some embodiments, the at least one parameter to set up QoE measurements includes a list of QoE measurement configurations to set up or to modify. In certain embodiments, each entry in the list of QoE measurement configurations contains an QoE configuration index, a corresponding service type, and a corresponding measurement configuration.

In some embodiments, transmitting the first configuration to the communication device includes transmitting an RRC reconfiguration message (e.g., *RRCReconfiguration)* to a User Equipment device. In some embodiments, the reporting message contains a plurality of QoE measurement reports.

In some embodiments, the transmitter further transmits a second configuration to the communication device, the second configuration containing an indication to deactivate and release one or more QoE measurement configurations. In certain embodiments, the indication to deactivate and release one or more QoE measurement configurations includes a list of QoE measurement configurations to deactivate and release, where each entry in the list of QoE measurement configurations contains an QoE configuration index.

In some embodiments, the transmitter further transmits a second configuration to the communication device, the second configuration containing at least one indication to pause reporting of a particular QoE measurement configuration. In certain embodiments, the transmitter further transmits a third configuration to the communication device, the third configuration containing at least one indication to resume reporting of the particular QoE measurement configuration.

Disclosed herein is a first method for collecting QoE measurements, according to embodiments of the disclosure. The first method may be performed by a network entity, such as the base unit 121, the RAN node 207, and/or the network apparatus 1000, described above. The first method includes generating a first configuration for QoE measurements, the first configuration containing at least one parameter to set up QoE measurements for at least one service type and contains at least one reporting configuration for the at least one service type. The first method includes transmitting the first configuration to a communication device (e.g., to a UE) and receiving a reporting message from the communication device, the reporting message containing QoE measurements collected in accordance with the first configuration.

In some embodiments, the at least one parameter to set up QoE measurements includes a list of QoE measurement configurations to set up or to modify. In certain embodiments, each entry in the list of QoE measurement configurations contains an QoE configuration index, a corresponding service type, and a corresponding measurement configuration.

In some embodiments, transmitting the first configuration to the communication device includes transmitting an RRC reconfiguration message (e.g., *RRCReconfiguration)* to a User Equipment device. In some embodiments, the reporting message contains a plurality of QoE measurement reports.

In some embodiments, the first method further includes transmitting a second configuration to the communication device, the second configuration containing an indication to deactivate and release one or more QoE measurement configurations. In certain embodiments, the indication to deactivate and release one or more QoE measurement configurations includes a list of QoE measurement configurations to deactivate and release, where each entry in the list of QoE measurement configurations contains an QoE configuration index.

In some embodiments, the first method further includes transmitting a second configuration to the communication device, the second configuration containing at least one indication to pause reporting of a particular QoE measurement configuration. In certain embodiments, the first method further includes transmitting a third configuration to the communication device, the third configuration containing at least one indication to resume reporting of the particular QoE measurement configuration.

Disclosed herein is a second apparatus for collecting QoE measurements, according to embodiments of the disclosure. The second apparatus may be implemented by a UE device, such as the remote unit 105, the UE 205, and/or the user equipment apparatus 900, described above. The second apparatus includes a receiver that receives a first configuration for QoE measurements from a communication network, the first configuration containing at least one parameter to set up QoE measurements for at least one service type and at least one reporting configuration for the at least one service type. The second apparatus includes a processor that performs QoE measurements in accordance with the first configuration. The second apparatus includes a transmitter that transmits a reporting message to the communication network, the reporting message containing QoE measurements collected in accordance with the first configuration.

In some embodiments, the at least one parameter to set up QoE measurements includes a list of QoE measurement configurations to set up or to modify. In certain embodiments, each entry in the list of QoE measurement configurations contains an QoE configuration index, a corresponding service type, and a corresponding measurement configuration.

In some embodiments, receiving the first configuration from the communication network includes receiving an RRC reconfiguration message (e.g., *RRCReconfiguration)* from a RAN node (e.g., gNB). In some embodiments, the reporting message contains a plurality of QoE measurement reports.

In some embodiments, the receiver further receives a second configuration from the communication network, the second configuration containing an indication to deactivate and release one or more QoE measurement configurations. In certain embodiments, the indication to deactivate and release one or more QoE measurement configurations includes a list of QoE measurement configurations to deactivate and release, where each entry in the list of QoE measurement configurations contains an QoE configuration index.

In some embodiments, the receiver further receives a second configuration from the communication network, the second configuration containing at least one indication to pause reporting of a particular QoE measurement configuration. In certain embodiments, the receiver further receives a third configuration from the communication network, the third configuration containing at least one indication to resume reporting of the particular QoE measurement configuration.

Disclosed herein is a second method for collecting QoE measurements, according to embodiments of the disclosure. The second method may be performed by a UE device, such as the remote unit 105, the UE 205, and/or the user equipment apparatus 900, described above. The second method includes receiving a first configuration for QoE measurements from a communication network, the first configuration containing at least one parameter to set up QoE measurements for at least one service type and at least one reporting configuration for the at least one service type. The second method includes performing QoE measurements in accordance with the first configuration and transmitting a reporting message to the communication network, the reporting message containing QoE measurements collected in accordance with the first configuration.

In some embodiments, the at least one parameter to set up QoE measurements includes a list of QoE measurement configurations to set up or to modify. In certain embodiments, each entry in the list of QoE measurement configurations contains an QoE configuration index, a corresponding service type, and a corresponding measurement configuration.

In some embodiments, receiving the first configuration from the communication network includes receiving an RRC reconfiguration message (e.g., *RRCReconfiguration)* from a RAN node (e.g., gNB). In some embodiments, the reporting message contains a plurality of QoE measurement reports.

In some embodiments, the second method further includes receiving a second configuration from the communication network, the second configuration containing an indication to deactivate and release one or more QoE measurement configurations. In certain embodiments, the indication to deactivate and release one or more QoE measurement configurations includes a list of QoE measurement configurations to deactivate and release, where each entry in the list of QoE measurement configurations contains an QoE configuration index.

In some embodiments, the second method further includes receiving a second configuration from the communication network, the second configuration containing at least one indication to pause reporting of a particular QoE measurement configuration. In certain embodiments, the second method further includes receiving a third configuration from the communication network, the third configuration containing at least one indication to resume reporting of the particular QoE measurement configuration.

Embodiments may be practiced in other specific forms. The described embodiments are to be considered in all respects only as illustrative and not restrictive. The scope of the invention is, therefore, indicated by the appended claims rather than by the foregoing description.

## Claims

1. A method of a radio access network apparatus (207) in a communication network for collecting quality of experience, QoE, measurements, the method comprising:
generating a first configuration message for multiple QoE measurements, the first configuration message comprising, for each QoE measurement configuration, at least one parameter to set up QoE measurements for at least one service type and at least one reporting configuration for the at least one service type;
transmitting the first configuration message (519) to a communication device (205);
receiving a reporting message (527) from the communication device, the reporting message comprising QoE measurements collected in accordance with the first configuration message.

2. The method of claim 1, wherein the at least one parameter to set up QoE measurements comprises a list of QoE measurement configurations to set up or to modify.

3. The method of claim 2, wherein each entry in the list of QoE measurement configurations comprises an QoE configuration index, a corresponding service type, and a corresponding measurement configuration.

4. The method of any preceding claim, further comprising transmitting a second configuration message (607) to the communication device (205), the second configuration message comprising an indication to deactivate and release one or more QoE measurement configurations.

5. The method of claim 4, wherein the indication to deactivate and release one or more QoE measurement configurations comprises a list of QoE measurement configurations to deactivate and release, wherein each entry in the list of QoE measurement configurations comprises an QoE configuration index.

6. The method of claim 1, 2 or 3, further comprising transmitting a second configuration message (701) to the communication device (205), the second configuration message comprising at least one indication to pause reporting of a particular QoE measurement configuration.

7. The method of claim 6, further comprising transmitting a third configuration message (709) to the communication device (205), the third configuration message comprising at least one indication to resume reporting of the particular QoE measurement configuration.

8. The method of any preceding claim, wherein the reporting message comprises a plurality of QoE measurement reports (527).

9. The method of any preceding claim, wherein transmitting the first configuration message (519) to the communication device (205) comprises transmitting an RRC reconfiguration message to a User Equipment device.

10. A radio access network device (207;1000) in a communication network comprising:
a processor (1005) configured to generate a first configuration message for multiple quality of experience, QoE, measurements, the first configuration message comprising , for each QoE measurement configuration, at least one parameter to set up QoE measurements for at least one service type and at least one reporting configuration for the at least one service type;
a transmitter (1030) configured to transmit the first configuration message (519) to a communication device (205); and
a receiver (1035) configured to receive a reporting message (527) from the communication device, the reporting message comprising QoE measurements collected in accordance with the first configuration message.

11. A user equipment communication apparatus (205;900) for collecting quality of experience, QoE, measurements, the apparatus comprising:
a receiver (935) configured to receive a first configuration message (519) for multiple QoE measurements from a communication network (207), the first configuration message comprising , for each QoE measurement configuration, at least one parameter to set up QoE measurements for at least one service type and at least one reporting configuration for the at least one service type;
a processor (905) configured to perform QoE measurements in accordance with the first configuration message; and
a transmitter (930) configured to transmit a reporting message to the communication network, the reporting message comprising QoE measurements collected in accordance with the first configuration message.

12. The apparatus of claim 11, wherein the at least one parameter to set up QoE measurements comprises a list of QoE measurement configurations to set up or to modify.

13. The apparatus of claim 12, wherein each entry in the list of QoE measurement configurations comprises an QoE configuration index, a corresponding service type, and a corresponding measurement configuration.

14. The apparatus of claim 11, 12 or 13, wherein the receiver (935) is further configured to receive a second configuration message (607) from the communication network (207), the second configuration message comprising an indication to deactivate and release one or more QoE measurement configurations.

15. The apparatus of claim 14, wherein the indication to deactivate and release one or more QoE measurement configurations comprises a list of QoE measurement configurations to deactivate and release, wherein each entry in the list of QoE measurement configurations comprises an QoE configuration index.

## Patentansprüche

1. Verfahren einer Funkzugangsnetzvorrichtung (207) in einem Kommunikationsnetz zum Sammeln von Messungen der Erlebnisqualität, QoE, wobei das Verfahren umfasst:
Erzeugen einer ersten Konfigurationsnachricht für mehrere QoE-Messungen, wobei die erste Konfigurationsnachricht für jede QoE-Messungskonfiguration mindestens einen Parameter, um QoE-Messungen für mindestens einen Diensttyp einzurichten, und mindestens eine Berichtskonfiguration für den mindestens einen Diensttyp umfasst;
Übertragen der ersten Konfigurationsnachricht (519) zu einer Kommunikationsvorrichtung (205);
Empfangen einer Berichtsnachricht (527) von der Kommunikationsvorrichtung, wobei die Berichtsnachricht QoE-Messungen umfasst, die gemäß der ersten Konfigurationsnachricht gesammelt wurden.

2. Verfahren nach Anspruch 1, wobei der mindestens eine Parameter zum Einrichten von QoE-Messungen eine Liste von QoE-Messungskonfigurationen zum Einrichten oder Modifizieren umfasst.

3. Verfahren nach Anspruch 2, wobei jeder Eintrag in der Liste von QoE-Messungskonfigurationen einen QoE-Konfigurationsindex, einen entsprechenden Diensttyp und eine entsprechende Messungskonfiguration umfasst.

4. Verfahren nach einem der vorhergehenden Ansprüche, ferner umfassend: Übertragen einer zweiten Konfigurationsnachricht (607) zu der Kommunikationsvorrichtung (205), wobei die zweite Konfigurationsnachricht eine Anweisung umfasst, eine oder mehrere QoE-Messungskonfigurationen zu deaktivieren und freizugeben.

5. Verfahren nach Anspruch 4, wobei die Anweisung, eine oder mehrere QoE-Messungskonfigurationen zu deaktivieren und freizugeben, eine Liste von QoE-Messungskonfigurationen, die zu deaktivieren und freizugeben sind, umfasst, wobei jeder Eintrag in der Liste von QoE-Messungskonfigurationen einen QoE-Konfigurationsindex umfasst.

6. Verfahren nach Anspruch 1, 2 oder 3, ferner umfassend: Übertragen einer zweiten Konfigurationsnachricht (701) zu der Kommunikationsvorrichtung (205), wobei die zweite Konfigurationsnachricht mindestens eine Anweisung umfasst, die Berichterstattung über eine bestimmte QoE-Messungskonfiguration zu pausieren.

7. Verfahren nach Anspruch 6, ferner umfassend: Übertragen einer dritten Konfigurationsnachricht (709) zu der Kommunikationsvorrichtung (205), wobei die dritte Konfigurationsnachricht mindestens eine Anweisung umfasst, die Berichterstattung über die bestimmte QoE-Messungskonfiguration wieder aufzunehmen.

8. Verfahren nach einem der vorhergehenden Ansprüche, wobei die Berichtsnachricht eine Vielzahl von QoE-Messungsberichten (527) umfasst.

9. Verfahren nach einem der vorhergehenden Ansprüche, wobei das Übertragen der ersten Konfigurationsnachricht (519) zu der Kommunikationsvorrichtung (205) umfasst: Übertragen einer RRC-Rekonfigurierungsnachricht zu einer Benutzerendgerät-Vorrichtung.

10. Funkzugangsnetzvorrichtung (207; 1000) in einem Kommunikationsnetz, umfassend:
einen Prozessor (1005), der dafür konfiguriert ist, eine erste Konfigurationsnachricht für mehrere Messungen der Erlebnisqualität, QoE, zu erzeugen, wobei die erste Konfigurationsnachricht für jede QoE-Messungskonfiguration mindestens einen Parameter, um QoE-Messungen für mindestens einen Diensttyp einzurichten, und mindestens eine Berichtskonfiguration für den mindestens einen Diensttyp umfasst;
einen Sender (1030), der dafür konfiguriert ist, die erste Konfigurationsnachricht zu einer Kommunikationsvorrichtung (205) zu übertragen; und
einen Empfänger (1035), der dafür konfiguriert ist, eine Berichtsnachricht (527) von der Kommunikationsvorrichtung zu empfangen, wobei die Berichtsnachricht QoE-Messungen umfasst, die gemäß der ersten Konfigurationsnachricht gesammelt wurden.

11. Benutzerendgerät-Kommunikationsvorrichtung (205; 900) zum Sammeln von Messungen der Erlebnisqualität, QoE, wobei die Vorrichtung umfasst:
einen Empfänger (935), der dafür konfiguriert ist, eine erste Konfigurationsnachricht (519) für mehrere QoE-Messungen von einem Kommunikationsnetz (207) zu empfangen, wobei die erste Konfigurationsnachricht für jede QoE-Messungskonfiguration mindestens einen Parameter, um QoE-Messungen für mindestens einen Diensttyp einzurichten, und mindestens eine Berichtskonfiguration für den mindestens einen Diensttyp umfasst;
einen Prozessor (905), der dafür konfiguriert ist, QoE-Messungen gemäß der ersten Konfigurationsnachricht durchzuführen; und
einen Sender (930), der dafür konfiguriert ist, eine Berichtsnachricht zu dem Kommunikationsnetz zu übertragen, wobei die Berichtsnachricht QoE-Messungen umfasst, die gemäß der ersten Konfigurationsnachricht gesammelt wurden.

12. Gerät nach Anspruch 11, wobei der mindestens eine Parameter, um QoE-Messungen einzurichten, eine Liste von QoE-Messungskonfigurationen umfasst, die eingerichtet oder modifiziert werden sollen.

13. Gerät nach Anspruch 12, wobei jeder Eintrag in der Liste von QoE-Messungskonfigurationen einen QoE-Konfigurationsindex, einen entsprechenden Diensttyp und eine entsprechende Messungskonfiguration umfasst.

14. Gerät nach Anspruch 11, 12 oder 13, wobei der Empfänger (935) ferner dafür konfiguriert ist, eine zweite Konfigurationsnachricht (607) von dem Kommunikationsnetz (207) zu empfangen, wobei die zweite Konfigurationsnachricht eine Anweisung umfasst, eine oder mehrere QoE-Messungskonfigurationen zu deaktivieren und freizugeben.

15. Gerät nach Anspruch 14, wobei die Anweisung, eine oder mehrere QoE-Messungskonfigurationen zu deaktivieren und freizugeben, eine Liste von QoE-Messungskonfigurationen, die zu deaktivieren und freizugeben sind, umfasst, wobei jeder Eintrag in der Liste von QoE-Messungskonfigurationen einen QoE-Konfigurationsindex umfasst.

## Revendications

1. Procédé d'un appareil de réseau d'accès radio (207) dans un réseau de communication pour la collecte de mesures de qualité d'expérience (QoE), le procédé comprenant :
la génération d'un premier message de configuration pour des mesures de QoE multiples, le premier message de configuration comprenant, pour chaque configuration de mesure de QoE, au moins un paramètre pour paramétrer des mesures de QoE pour au moins un type de service et au moins une configuration de reporting pour le au moins un type de service ;
la transmission du premier message de configuration (519) à un dispositif de communication (205) ;
la réception d'un message de reporting (527) du dispositif de communication, le message de reporting comprenant les mesures de QoE collectées conformément au premier message de configuration.

2. Procédé selon la revendication 1, dans lequel le au moins un paramètre pour paramétrer des mesures de QoE comprend une liste de configurations de mesure de QoE à paramétrer ou à modifier.

3. Procédé selon la revendication 2, dans lequel chaque entrée dans la liste de configurations de mesure de QoE comprend un indice de configuration de QoE, un type de service correspondant et une configuration de mesure correspondante.

4. Procédé selon l'une quelconque des revendications précédentes, comprenant en outre la transmission d'un deuxième message de configuration (607) au dispositif de communication (205), le deuxième message de configuration comprenant une indication pour désactiver et libérer une ou plusieurs configuration(s) de mesure de QoE.

5. Procédé selon la revendication 4, dans lequel l'indication pour désactiver et libérer une ou plusieurs configuration(s) de mesure de QoE comprend une liste de configurations de mesure de QoE à désactiver et libérer, dans lequel chaque entrée dans la liste de configurations de mesure de QoE comprend un indice de configuration de QoE.

6. Procédé selon la revendication 1, 2 ou 3, comprenant en outre la transmission d'un deuxième message de configuration (701) au dispositif de communication (205), le deuxième message de configuration comprenant au moins une indication pour interrompre le reporting d'une configuration de mesure de QoE particulière.

7. Procédé selon la revendication 6, comprenant en outre la transmission d'un troisième message de configuration (709) au dispositif de communication (205), le troisième message de configuration comprenant au moins une indication pour reprendre le reporting de la configuration de mesure de QoE particulière.

8. Procédé selon l'une quelconque des revendications précédentes, dans lequel le message de reporting comprend une pluralité de rapports de mesure de QoE (527).

9. Procédé selon l'une quelconque des revendications précédentes, dans lequel la transmission du premier message de configuration (519) au dispositif de communication (205) comprend la transmission d'un message de reconfiguration RRC à un dispositif d'équipement utilisateur.

10. Dispositif de réseau d'accès radio (207 ; 1000) dans un réseau de communication comprenant :
un processeur (1005) configuré pour générer un premier message de configuration pour des mesures de qualité d'expérience, QoE, multiples, le premier message de configuration comprenant, pour chaque configuration de mesure de QoE, au moins un paramètre pour paramétrer des mesures de QoE pour au moins un type de service et au moins une configuration de reporting pour le au moins un type de service ;
un transmetteur (1030) configuré pour transmettre le premier message de configuration (519) à un dispositif de communication (205) ; et
un récepteur (1035) configuré pour recevoir un message de reporting (527) du dispositif de communication, le message de reporting comprenant les mesures de QoE collectées conformément au premier message de configuration.

11. Appareil de communication d'équipement utilisateur (205 ; 900) pour la collecte de mesures de qualité d'expérience QoE, l'appareil comprenant :
un récepteur (935) configuré pour recevoir un premier message de configuration (519) pour des mesures de QoE multiples à partir d'un réseau de communication (207), le premier message de configuration comprenant, pour chaque configuration de mesure de QoE, au moins un paramètre pour paramétrer des mesures de QoE pour au moins un type de service et au moins une configuration de reporting pour le au moins un type de service ;
un processeur (905) configuré pour effectuer des mesures de QoE conformément au premier message de configuration ; et
un transmetteur (930) configuré pour transmettre un message de reporting au réseau de communication, le message de reporting comprenant les mesures de QoE collectées conformément au premier message de configuration.

12. Appareil selon la revendication 11, dans lequel l'au moins un paramètre pour paramétrer des mesures de QoE comprend une liste de configurations de mesure de QoE à paramétrer ou à modifier.

13. Appareil selon la revendication 12, dans lequel chaque entrée de la liste de configurations de mesure de QoE comprend un indice de configuration de QoE, un type de service correspondant et une configuration de mesure correspondante.

14. Appareil selon les revendications 11, 12 ou 13, dans lequel le récepteur (935) est en outre configuré pour recevoir un deuxième message de configuration (607) du réseau de communication (207), le deuxième message de configuration comprenant une indication pour désactiver et libérer une ou plusieurs configuration(s) de mesure de QoE.

15. Appareil selon la revendication 14, dans lequel l'indication pour désactiver et libérer une ou plusieurs configuration(s) de mesure de QoE comprend une liste de configurations de mesure de QoE à désactiver et libérer, dans lequel chaque entrée dans la liste de configurations de mesure de QoE comprend un indice de configuration de QoE.
